# EUROPÄISCHE PATENTANMELDUNG

(11) **EP 3 009 200 A1**
(43) Veröffentlichungstag der Anmeldung: **20.04.2016**
(21) Anmeldenummer: 14188847.9
(22) Anmeldetag: 14.10.2014
(51) Int. Cl.: B07C 5/12, B65G 47/64, G07F 7/06

(54) **Vorrichtung zum Sortieren von Leergut**

(71) Anmelder: LOGIPACK Partner GmbH, 18439 Stralsund (DE)
(72) Erfinder: Hiller, Torsten, 28279 Bremen (DE)
(74) Vertreter: Hauck Patentanwaltspartnerschaft mbB

(57) **Zusammenfassung**

Vorrichtung zum Sortieren von Leergut mit
• einem Leergutautomaten, der eine Flascheneingabe, eine Flaschenausgabe und eine Flaschenerkennung zwischen Flascheneingabe und Flaschenausgabe zum Erkennen des Flaschentyps einer von der Flascheneingabe zur Flaschenausgabe von der Flaschenerkennung vorbei verlagerten Flasche aufweist,
• einem Flaschentisch mit mindestens einem Förderband zum Fördern von Flaschen über den Flaschentisch und einem hochstehenden Außengeländer zum Rückhalten von Flaschen auf dem Flaschentisch,
• einer Flaschenweiche, die einen Einlass und einen Auslass aufweist, wobei der Einlass von der Flaschenausgabe gespeist ist und die Flaschenweiche mit Ihrem Auslass in verschiedene Weichenstellungen über dem Flaschentisch einstellbar ist, die unterschiedliche Positionen senkrecht zur Förderrichtung des Förderbandes aufweisen, wobei in mindestens einer Weichenstellung der Auslass über dem Förderband angeordnet ist,
• einem mit der Flaschenweiche verbundenen Aktor, der ausgebildet ist, die Flaschenweiche in die verschiedenen Weichenstellungen einzustellen, und
• einer Steuerungseinrichtung, die mit der Flaschenerkennung des Leergutautomaten und mit dem Aktor verbunden ist und die ausgebildet ist, die Flaschenweiche beim Erkennen einer Flasche eines bestimmten Flaschentyps durch die Flaschenerkennung in eine erste Weichenstellung einzustellen und beim Erkennen einer Flasche eines anderen als des bestimmten Flaschentyps in eine von der ersten Weichenstellung verschiedene, zweite Weichenstellung einzustellen.

## Beschreibung

Die Erfindung betrifft eine Vorrichtung zum Sortieren von Leergut. Hierunter werden in dieser Anmeldung vorzugsweise Mehrwegflaschen verstanden.

Herkömmlicherweise bringt der Endverbraucher das Leergut in Form einzelner Flaschen oder eingefüllt in Flaschenkisten zum Handel. Dort gibt er das Leergut in die Flascheneingabe eines Leergutautomaten ein. Der Handel zahlt dem Endverbraucher das Pfand für akzeptierte Einweg- und Mehrwegflaschen aus. Die akzeptierten Einzelflaschen werden vom Leergutautomaten in Einwegflaschen und Mehrwegflaschen sortiert. Einwegflaschen werden sogleich in Sammelbehälter separiert oder komprimiert bzw. zerkleinert und einem Sammelcontainer für das Recycling zugeführt. Mehrwegflaschen werden von der Flaschenausgabe des Leergutautomaten auf einem Flaschenablagetisch abgesetzt. In den Flaschentisch ist in der Regel ein Förderband integriert, das die Flaschen über den Flaschentisch fördert, sodass sie sich an seinem hinteren Rand stauen. Vom Flaschentisch werden die Flaschen händisch in Flaschenkisten, Trägerplatten (Trays) oder andere Ladungsträger gepackt. In den Sammelbehältern sind die Mehrwegflaschen nicht sortenrein sortiert.

Vom Handel gelangen die Mehrwegflaschen in den Sammelbehältern zu den Zentrallagern des Handels oder zum Getränkefachgroßhandel. Von dort werden sie an die Brauereien zurückgegeben. Eine sortenreine Sortierung der Mehrwegflaschen erfolgt bei speziellen Dienstleistern oder in den Brauereien. Die Rückführung von Mehrwegflaschen ist aufwendig, insbesondere weil diese bis zur sortenreinen Sortierung lange Transportwege zurücklegen.

Davon ausgehend liegt der Erfindung die Aufgabe zugrunde, eine Vorrichtung zu schaffen, die den Aufwand für die Rückführung von Teilen des Leerguts zu den Brauereien reduziert.

Die Aufgabe wird durch eine Vorrichtung zum Sortieren von Leergut mit den Merkmalen von Anspruch 1 gelöst. Vorteilhafte Ausgestaltungen der Vorrichtung sind in Unteransprüchen angegeben.

Die erfindungsgemäße Vorrichtung zum Sortieren von Leergut hat
- einen Leergutautomaten, der eine Flascheneingabe, eine Flaschenausgabe und eine Flaschenerkennung zwischen Flascheneingabe und Flaschenausgabe zum Erkennen des Flaschentyps einer von der Flascheneingabe zur Flaschenausgabe an der Flaschenerkennung vorbei verlagerten Flasche aufweist,
- einen Flaschentisch mit mindestens einem Förderband zum Fördern von Flaschen über den Flaschentisch und einem hochstehenden Außengeländer zum Rückhalten von Flaschen auf dem Flaschentisch,
- eine Flaschenweiche, die einen Einlass und einen Auslass aufweist, wobei der Einlass von der Flaschenausgabe gespeist ist und die Flaschenweiche mit ihrem Auslass in verschiedene Weichenstellungen über dem Flaschentisch einstellbar ist, die unterschiedliche Positionen senkrecht zur Förderrichtung des Förderbandes aufweisen, wobei in mindestens einer Weichenstellung der Auslass über dem Förderband angeordnet ist,
- einen mit der Flaschenweiche verbundenen Aktor, der ausgebildet ist, die Flaschenweiche in die verschiedenen Weichenstellungen einzustellen, und
- eine Steuerungseinrichtung, die mit der Flaschenerkennung des Leergutautomaten und mit dem Aktor verbunden ist und die ausgebildet ist, die Flaschenweiche beim Erkennen einer Flasche eines bestimmten Flaschentyps durch die Flaschenerkennung in eine erste Weichenstellung einzustellen und beim Erkennen einer Flasche eines anderen als des bestimmten Flaschentyps in eine von der ersten Weichenstellung verschiedene, zweite Weichenstellung einzustellen.

Bei der erfindungsgemäßen Vorrichtung wird die Flaschenerkennung eines Leergutautomaten genutzt, um zu erkennen, ob ein vorgegebener bestimmter Flaschentyp oder ein anderer, von dem bestimmten Flaschentyp abweichender Flaschentyp in den Leergutautomaten eingegeben wurde. Die Erkennungstechnik der Flaschenerkennung umfasst z.B. Kameras und ein automatisches elektronisches Bildauswertungssystem zum Auswerten der von den Kameras gelieferten Bilder oder Filme. Bei dem bestimmten Flaschentyp handelt es sich beispielsweise um eine NRW-Flasche, Longneck-Flasche, Bitburger-Flasche, Lochmund-Flasche oder Normflasche des Verbands Deutscher Mineralbrunnen. Der bestimmte Flaschentyp kann insbesondere durch eines oder mehrere der Merkmale Form, Farbe, Material, Pfandwert und Füllvolumen charakterisiert sein. Bei dem bestimmten Flaschentyp handelt es sich vorzugsweise um einen Flaschentyp, der besonders häufig vorkommt. Hierbei handelt es sich vorzugsweise um den Flaschentyp, der am häufigsten vorkommt. Dieser Flaschentyp kann je nach Standort der Annahmestelle für das Leergut, in der die Vorrichtung installiert ist, verschieden sein und wird deshalb vorzugsweise standortspezifisch festgelegt. Falls in den Leergutautomaten eine einzelne Flasche eingegeben wird, erkennt die Flaschenerkennung den Flaschentyp oder sie erkennt ihn nicht. Falls sie den Flaschentyp nicht erkennt, wird die Flasche vom Leergutautomaten in bekannter Weise zurückgewiesen. Falls die Flaschenerkennung erkennt, dass die Flasche von dem bestimmten Flaschentyp ist, sorgt die Steuerungseinrichtung dafür, dass die Flaschenweiche die erste Weichenstellung einnimmt. In der ersten Weichenstellung ist vorzugsweise der Auslass der Flaschenweiche zentral über dem Förderband angeordnet. Mehrwegflaschen, die zum bestimmten Flaschentyp gehören, werden somit von dem Förderband zum hinteren Ende des Flaschentisches hin transportiert. Sie können in herkömmlicher Weise am hinteren Ende des Flaschentisches gesammelt und händisch gezielt in die richtigen Flaschenkisten oder andere Ladungsträger für Flaschen gefüllt werden.

Falls der Leergutautomat eine Flasche von einem anderen als dem bestimmten Flaschentyp erkennt, sorgt die Steuerungseinrichtung dafür, dass die Flaschenweiche eine zweite Weichenstellung einnimmt. Die Flasche wird somit von der Flaschenweiche in einer anderen Position auf dem Flaschentisch ausgegeben, als die Flasche vom bestimmten Flaschentyp. Diese Position ist vorzugsweise eine seitlich über dem Förderband angeordnete Position oder eine Position neben dem Förderband. Die Flasche von dem anderen Flaschentyp gelangt somit in einen anderen Bereich des Flaschentisches als die Flasche vom bestimmten Flaschentyp. Die Flasche von dem anderen Flaschentyp kann entweder von einem Förderband oder durch Nachdrängen der Flaschen zum hinteren Ende des Flaschentisches hin transportiert werden. Flaschen von dem anderen Flaschentyp können am hinteren Ende des Flaschentischs gesammelt und händisch in Flaschenkisten oder andere Ladungsträger gefüllt werden.

Für die erfindungsgemäße Vorrichtung können herkömmliche Leergutautomaten mit Flaschenerkennung verwendet werden, da diese bereits die Fähigkeit haben, verschiedene Flaschentypen zu erkennen. Die Erfindung nutzt dies erstmalig für eine sortenreine Sortierung eines bestimmten Flaschentyps. Die Erfindung eignet sich für die Nachrüstung bekannter Leergutautomaten mit Flaschentisch, die in den Annahmestellen für Leergut bereits ihren Dienst tun. An bestehenden Anlagen müssen im Wesentlichen nur die Flaschenweiche, der Aktor und die Steuerungseinrichtung zum Steuern des Aktors nachgerüstet werden. Diese Vorrichtungsteile können in die Anlage eingebaut bzw. angebaut werden. Alternativ wird die gesamte Vorrichtung komplett neu hergestellt.

Die Vorrichtung reduziert wesentlich den Aufwand für das Rückführen von Mehrwegflaschen zu den Brauereien, weil sie Flaschen eines bestimmten Flaschentyps bereits sortenrein sortiert. Falls dem Leergutautomaten Einwegflaschen zugeführt werden, können diese in herkömmlicher Weise zusammengepresst bzw. zerkleinert, aussortiert und für das Recycling in einem Container gesammelt werden.

Ferner eröffnet die Erfindung die Möglichkeit, mehrere Flaschentypen jeweils sortenrein zu sortieren. Hierfür müssen die sortenrein zu sortierenden Flaschentypen einer bestimmten Weichenstellung der Flaschenweiche zugeordnet werden. Vorzugsweise werden die in den verschieden Weichenstellungen ausgegebenen Flaschen durch Seitengeländer voneinander in die Fraktionen "sortenrein sortiert" und "vorsortiert" getrennt. Die Fraktion "sortenrein sortiert" beinhaltet nur den festgelegten Flaschentyp, z.B. NRW Flaschen. Die Fraktion "vorsortiert" stellt alle anderen Mehrwegflaschen außer z.B. NRW-Flaschen dar. Weiterhin vorzugsweise sind ein oder mehrere Förderbänder vorhanden, welche die Flaschen der verschiedenen Flaschentypen zum hinteren Ende des Flaschentisches transportieren.

Der Aktor zum Verlagern der Flaschenweiche ist beispielsweise ein linearer elektromechanischer Antrieb oder ein Hydraulik- oder ein Pneumatikzylinder. Ferner kann der Aktor ein Elektromotor mit einem Getriebe sein, das eine Drehbewegung auf die Flaschenweiche überträgt.

Vorzugsweise werden die Flaschen in dieser vertikalen Ausrichtung auf dem Flaschentisch verlagert. Weiterhin Vorzugsweise werden die Flaschen von der Flaschenausgabe des Leergutautomaten senkrecht ausgerichtet mit dem Flaschenboden auf den Flaschentisch aufgesetzt. Grundsätzlich ist es aber auch möglich, dass die Flaschen in einer anderen als einer vertikalen Ausrichtung vom Leergutautomaten in die Flaschenweiche eingespeist und von dieser in vertikaler Ausrichtung mit dem Boden unten auf den Flaschentisch abgesetzt werden.

Gemäß einer Ausgestaltung weist die Flaschenweiche mindestens ein senkrecht zur Förderrichtung des Förderbandes verlagerbares Weichenbauteil mit mindestens einer Leitfläche auf, die in mindestens einer Weichenstellung eine auf dem Förderband aufgesetzte Flasche beim Transport auf dem Förderband quer zur Förderrichtung des Förderbandes ablenkt. Diese Ausgestaltung ist mit geringem Aufwand und Platzbedarf realisierbar.

Gemäß einer weiteren Ausgestaltung weist das Weichenbauteil mindestens eine schräg zur Förderrichtung des Förderbandes geneigte Leitfläche auf und ist entlang einer senkrecht zur Förderrichtung des Förderbandes gerichteten Führung in verschiedene Weichenstellungen einstellbar. Bei dieser Ausgestaltung sind Aufwand und Platzbedarf besonders gering.

Gemäß einer weiteren Ausgestaltung weist die Flaschenweiche zwei Weichenbauteile auf, die äußere Leitflächen auf voneinander abgewandten Seiten haben und zwischen denen ein Abstandsbereich vorhanden ist, durch den in einer ersten Weichenstellung eine auf dem Förderband angeordnete Flasche in Förderrichtung des Förderbandes hindurchtreten kann, wobei in einer zweiten Weichenstellung das eine Weichenbauteil mit seiner äußeren Seitenfläche eine auf dem Förderband transportierte Flasche zur einen Seite des Förderbandes hin ablenkt und in einer dritten Weichenstellung das andere Weichenbauteil mit seiner äußeren Leitfläche eine auf dem Förderband transportierte Flasche zur anderen Seite des Förderbandes hin seitlich ablenkt. Diese Ausgestaltung ermöglicht in baulich einfacher und platzsparender Weise eine Sortierung der aus der Flaschenausgabe des Leergutautomaten austretenden Flaschen auf drei Bereiche des Flaschentisches. So kann eine Flasche vom bestimmten Flaschentyp (z. B. eine NRW 0,5 1-Flasche) zentral auf dem Förderband zum hinteren Ende des Flaschentischs transportiert werden. Ferner können Flaschen von einem oder mehreren weiteren bestimmten Flaschentypen (z. B. PET-Flaschen) auf einer Seite des Förderbandes gesammelt werden. Hierfür können die Flaschen von der Flaschenweiche in der zweiten Weichenstellung entweder auf einem seitlichen Bereich des Förderbandes oder daneben abgesetzt werden, sodass sie vom Förderband oder von nachdrängenden Flaschen nach hinten verschoben werden. Alle übrigen Flaschen, die nicht zu den bestimmten Flaschentypen gehören, können auf der anderen Seite des Förderbandes gesammelt werden. Hierfür können diese Flaschen in der dritten Weichenstellung auf der anderen Seite des Förderbandes oder daneben abgesetzt werden, um von dem Förderband oder von nachdrängenden Flaschen nach hinten transportiert zu werden.

Gemäß einer weiteren Ausgestaltung steht hinter der Flaschenweiche oberhalb des mindestens einen Förderbandes mindestens ein zum Förderband paralleles Seitengeländer hoch und hat die Flaschenweiche verschiedene Weichenstellungen mit dem Auslass auf verschiedenen Seiten des Seitengeländers. Das Seitengeländer ist so ausgebildet, dass es die Flaschen an einem Übertritt von der einen auf die andere Seite des Seitengeländers hindert. Hierdurch wird eine Vermischung von Flaschen verhindert, die in verschiedenen Weichenstellungen der Flaschenweiche auf dem Flaschentisch abgesetzt werden.

Gemäß einer weiteren Ausgestaltung stehen hinter der Flaschenweiche im zentral oberhalb des Förderbandes zwei zum Förderband parallele Seitengeländer hoch, wobei zwischen den beiden Seitengeländern ein Zentralbereich und auf den voneinander abgewandten Seiten der beiden Seitengeländer Seitenbereiche des Förderbandes vorhanden sind, sodass eine aus der Flaschenweiche in der ersten Weichenstellung austretende Flasche vom Transportband zwischen den Seitengeländern transportiert wird, eine aus der Flaschenweiche in der zweiten Weichenstellung austretende Flasche außerhalb der Seitengeländer auf dem einen Seitenbereich des Förderbandes transportiert wird und eine aus der Flaschenweiche in der dritten Weichenstellung austretende Flasche außerhalb der Seitengeländer auf dem anderen Seitenbereich des Förderbandes transportiert wird. Bei dieser Ausgestaltung wird das Förderband zum Transportieren von drei verschiedenen Fraktionen Flaschen zum hinteren Ende des Flaschentisches hin genutzt. Am hinteren Ende des Flaschentisches können die verschiedenen Flaschengruppen aufgestaut und seitlich auf einen größeren Bereich des Flaschentisches verteilt werden. Diese Ausgestaltung kann bei herkömmlichen Flaschentischen mit integrierten Förderbändern verwirklicht werden.

Gemäß einer weiteren Ausgestaltung stehen zwischen der Flaschenausgabe und der Flaschenweiche oberhalb des Zentralbereiches des Förderbandes zwei vordere Seitengeländer hoch, zwischen denen durch die Flaschenausgabe auf das Förderband aufgesetzte Flaschen auf dem Förderband transportiert werden. Durch die vorderen Seitengeländer werden die von der Flaschenweiche ausgegebenen Flaschen der Flaschenweiche sicher zugeführt.

Gemäß einer weiteren Ausgestaltung schließt sich in Förderrichtung des Förderbandes hinten an jedes Seitengeländer ein hinteres Seitengeländer an, wobei der Abstand der hinteren Seitengeländer voneinander in Förderrichtung des Förderbandes zunimmt und die hinteren Seitengeländer eine nach hinten sich erweiternde zentrale Sammelzone für Flaschen seitlich begrenzen. Hierdurch wird eine große Sammelzone für Flaschen geschaffen, die zentral auf dem Förderband zum hinteren Ende des Flaschentisches transportiert werden. Auch diese Maßnahme ist geeignet für eine Nachrüstung herkömmlicher Flaschentische. Grundsätzlich ist es aber auch möglich, die vom Förderband transportierten Flaschen ohne Begrenzung durch Seitengeländer am hinteren Ende des Flaschentisches anzustauen, da die von der Flaschenweiche auf verschiedene Bereiche des Flaschentisches verteilten Flaschen beim Transport zum hinteren Ende im Wesentlichen voneinander getrennt sind. Alternativ wird an das hintere Ende des Flaschentisches ein weiterer Flaschentisch angesetzt, der die vom Förderband transportierten Flaschen aufnimmt, sodass sie gesondert von den übrigen Flaschen gesammelt werden.

Gemäß einer weiteren Ausgestaltung schließt sich in Förderrichtung des Förderbandes hinten an den Flaschentisch ein Flaschenpacktisch an, der parallele Flaschenbahnen aufweist, die mit vom Förderband zum Flaschenpacktisch transportierten Flaschen befüllbar sind, wobei benachbarte Flaschenbahnen in einem Abstand vom Flaschentisch durch vom Flaschenpacktisch hochstehende weitere Seitengeländer voneinander getrennt sind. Bei dieser Ausgestaltung gelangen die Flaschen vom Förderband aus auf den Flaschenpacktisch. Dort verteilen sie sich vor den weiteren Seitengeländern auf die verschiedenen Flaschenbahnen und füllen diese nach und nach auf. Die Seitengeländer hindern die Flaschen im hinteren Bereich des Flaschenpacktisches an einem Übertritt zwischen benachbarten Flaschenbahnen. In den Flaschenbahnen sind die Flaschen hintereinander in einer definierten Anordnung aufgereiht. Dies erleichtert die Überführung der Flaschen vom Flaschenpacktisch in Flaschenkisten, Trägerplatten oder andere Ladungsträger. Vorzugsweise weist der Flaschenpacktisch am äußeren Rand ein hochstehendes weiteres Außengeländer auf, welches Flaschen am Herunterfallen vom Flaschenpacktisch hindert.

Gemäß einer bevorzugten Ausgestaltung weist der Flaschenpacktisch Fallschächte unterhalb der Flaschenbahn auf, sowie Verschlusseinrichtungen, die in einer Schließstellung die Flaschenbahnen unten begrenzen, sodass Flaschen auf den Verschlusseinrichtungen entlang der Flaschenbahnen verlagerbar sind, und die in eine Öffnungsstellung verlagerbar sind, in der sie die Fallschächte freigeben, sodass in den Flaschenbahnen angeordnete Flaschen in die Fallschächte hineinfallen, wobei mindestens eine mit den Verschlusseinrichtungen verbundene Antriebseinrichtung vorhanden ist, mittels der die Verschlusseinrichtungen in die Schließstellung und in die Öffnungsstellung verlagerbar sind und ein Lagerplatz für mindestens einen Ladungsträger für Flaschen unter den Fallschächten vorhanden ist, auf dem mindestens ein Ladungsträger positionierbar ist, um Flaschen durch die Fallschächte in die Ladungsträger einzusetzen.

Wenn sämtliche Flaschenbahnen oberhalb der Fallschächte mit Flaschen aufgefüllt sind, können die Verschlusseinrichtungen geöffnet werden, sodass die Flaschen, die in den Flaschenbahnen auf den Verschlusseinrichtungen positioniert sind, in die Fallschächte unterhalb der Flaschenbahn hineinfallen. Die Verschlusseinrichtungen sind mit einer Antriebseinrichtung verbunden, die es ermöglicht, die Verschlusseinrichtungen wahlweise in die Schließstellung und die Öffnungsstellung zu bringen. Aus den Fallschächten fallen die Flaschen in mindestens einen Ladungsträger hinein, der auf einem Lagerplatz für mindestens einen Ladungsträger unter den Fallschächten gelagert ist. Die Fallschächte sind so ausgerichtet, dass jede Flasche genau auf einem Stellplatz auf dem Ladungsträger platziert wird. Hierdurch wird der Ladungsträger mit Flaschen vom vorgegebenen Flaschentyp sortenrein befüllt. Danach werden die Verschlusseinrichtungen in Schließstellung gebracht und der sortenrein mit den Flaschen mit dem bestimmten Typ befüllten Ladungsträger gegen einen leeren Ladungsträger ersetzt. Der Ladungsträger ist vorzugsweise eine Flaschenkiste oder eine Trägerplatte.

Somit werden die Flaschen für das Rückführen zu den Brauereien bereits sortenrein sortiert in den zugehörigen Ladungsträgern bereitgestellt.

Vorzugsweise werden die Flaschen durch Auffüllen der Flaschenbahnen in eine parallele Anordnung in mehreren Reihen gebracht, die der Anordnung auf einem oder mehreren Ladungsträgern entspricht. Hierbei kann es sich insbesondere um die Anordnung von 0,5-Liter-Flaschen auf einem oder mehreren 0,5-Liter-Ladungsträgern handeln oder um die Anordnung von 0,33-Liter-Flaschen auf einem oder mehreren 0,33-Liter-Ladungsträgern. Ein 0,5-Liter-Ladungsträger umfasst 20 oder 40 Flaschen und ein 0,33-Liter-Ladungsträger umfasst 24 oder 48 Flaschen.

Gemäß einer Ausgestaltung sind die Verschlusseinrichtungen Verschlussklappen, die um eine horizontale Achse klappbar sind, in Schließstellung horizontal angeordnet und in Öffnungsstellung nach unten geklappt sind. Die Verschlussklappen sind besonders einfache und betriebssichere Verschlusseinrichtungen. In Schließstellung können die Flaschen über die Verschlussklappen gleiten und in Öffnungsstellung können sie entlang der Verschlussklappen in die Fallschächte hineinfallen.

Gemäß einer besonders einfachen und betriebssicheren Ausgestaltung weist jede Flaschenbahn nur eine einzige Verschlussklappe auf.

Gemäß einer weiteren Ausgestaltung weist der Flaschenpacktisch mindestens ein weiteres Förderband auf, dessen Förderrichtung parallel zu den Flaschenbahnen erstreckt ist und das am vorderen Rand auf den Flaschenpacktisch aufgesetzte Flaschen zu den Flaschenbahnen hin transportiert. Mittels des weiteren Förderbandes sind die parallelen Flaschenbahnen vorteilhaft gleichmäßig mit Flaschen befüllbar.

Gemäß einer weiteren Ausgestaltung weist die Vorrichtung Rückhalteeinrichtungen auf, die aus einer Rückhaltestellung, in der sie zwischen das weitere Förderband und die Flaschenbahnen eingreifen, um den weiteren Transport von Flaschen in die Flaschenbahnen zu blockieren, in eine Freigabestellung verlagerbar sind, in der sie nicht zwischen das weitere Förderband und die Flaschenbahnen eingreifen, und die eine weitere Antriebseinrichtung aufweist, mit der die Rückhalteeinrichtungen in die Rückhaltestellung und in die Freigabestellung verlagerbar sind. Zum Auffüllen der Flaschenbahnen mit Flaschen werden die Rückhalteeinrichtungen in die Freigabestellung gebracht. Beim Entleeren der Flaschenbahnen durch die Fallschächte in die Lagerträger werden die Rückhalteeinrichtungen in die Rückhaltestellung gebracht, damit keine weiteren ersten Flaschen von dem weiteren Förderband in die unten geöffneten Flaschenbahnen nachtransportiert werden. Dies würde nämlich zu einer Störung des Sortiervorgangs führen. Erst wenn die Verschlusseinrichtungen wieder in Schließstellung gebracht werden, werden die Rückhalteeinrichtungen in Freigabestellung gebracht. Zudem verhindern die Rückhalteeinrichtungen, dass die Flaschen in den Flaschenbahnen durch den Druck nachgeförderter Flaschen daran gehindert werden, in die Fallschächte zu fallen, wenn die Verschlusseinrichtungen in Öffnungsstellung gebracht werden.

Gemäß einer weiteren Ausgestaltung sind die Verschlusseinrichtungen und die Rückhalteeinrichtungen mit einer gemeinsamen Antriebseinrichtung verbunden. Dies erleichtert das Synchronisieren der Betätigung von Verschlusseinrichtungen und Rückhalteeinrichtungen und hilft, Fehler zu vermeiden. Grundsätzlich ist es aber auch möglich, die Verschlusseinrichtungen und die Rückhalteeinrichtungen mit voneinander getrennten Antriebseinrichtungen zu verbinden. Eine Synchronisierung kann durch den Anwender oder durch zusätzliche Sensor und eine Steuerungseinrichtung vorgenommen werden.

Gemäß einer weiteren Ausgestaltung sind die Rückhalteeinrichtungen Rückhaltefinger, die um eine horizontale Achse in die Rückhaltestellung und in die Freigabestellung schwenkbar sind. Diese Ausgestaltung ist besonders einfach und betriebssicher.

Gemäß einer weiteren Ausgestaltung ist zumindest ein Teil der Rückhaltefinger und der Verschlussklappen auf gemeinsamen horizontalen Lagerwellen fixiert. Hierdurch wird die gemeinsame Betätigung der Rückhaltefinger und Verschlussklappen durch eine gemeinsame Antriebseinrichtung in besonders einfacher und sicherer Weise erreicht.

Gemäß einer weiteren Ausgestaltung umfasst die Antriebseinrichtung ein mechanisches Getriebe, das eingangsseitig mit einem Antrieb und ausgangsseitig mit den Verschlusseinrichtungen und/oder den Rückhalteeinrichtungen verbunden ist. Das mechanische Getriebe begünstigt eine besonders einfache und betriebssichere Konstruktion. Gemäß einer besonders einfachen betriebssicheren Ausführung ist der Antrieb des Getriebes ein Bedienhebel.

Gemäß einer weiteren Ausgestaltung weisen die Fallschächte Führungsbleche auf, um die aus den Flaschenbahnen herunterfallenden Flaschen auf die Stellplätze eines Ladungsträgers auf einem Lagerplatz auszurichten. Die Flaschen können in den Flaschenbahnen in einem größeren Abstand voneinander vorsortiert werden, als sie auf dem Ladungsträger haben. Erst beim Herunterfallen in den Fallschächten werden die Flaschen auf den engeren Abstand gebracht, den sie schließlich auf dem Ladungsträger einnehmen.

Gemäß einer weiteren Ausgestaltung sind unterhalb der Fallschächte weitere Führungseinrichtungen vorhanden, um die Flaschen den Flaschenstellplätzen eines Ladungsträgers auf einem Lagerplatz zuzuführen. Gemäß einer bevorzugten Ausgestaltung umfassen die weiteren Führungseinrichtungen mehrere um eine Austrittsöffnung eines Fallschachts herum angeordnete, flexible Zentrierfinger, die nach unten auf eine vertikale Mittelachse durch eine Austrittsöffnung eines Fallschachtes zugeneigt sind. Die flexiblen Zentrierfinger begünstigen eine besonders genaue Zuführung zu einzelnen Flaschenstellplätzen und dämpfen zudem den Aufprall der Flaschen auf die Stellplätze.

Gemäß einer weiteren Ausgestaltung ist der Lagerplatz eine Arbeitsfläche eines Hubtisches, der unterhalb der Flaschenbahnen angeordnet ist. Der Hubtisch ermöglicht es, unterschiedliche Ladungsträger auf die optimale Höhe unterhalb der Flaschenbahnen einzustellen. Ferner kann der Hubtisch dazu benutzt werden, den Lagerplatz abzusenken, um einen befüllten Ladungsträger leicht abnehmen zu können, oder einen unbefüllten Ladungsträger aufzusetzen. Der Lagerplatz kann nach dem Aufsetzen eines leeren Ladungsträgers auf ein optimales Niveau hochgefahren werden.

Die Erfindung wird nachfolgen anhand der anliegenden Zeichnungen eines Ausführungsbeispiels näher erläutert. In den Zeichnungen zeigen:
- Fig. 1: eine Vorrichtung zum Sortieren von Leergut in einer Seitenansicht;
- Fig. 2: dieselbe Vorrichtung in der Draufsicht;
- Fig. 3: dieselbe Vorrichtung in einer Perspektivansicht schräg von hinten und von der Seite;
- Fig. 4: ein Leergutautomat derselben Vorrichtung im Vertikalschnitt;
- Fig. 5: ein Flaschentisch derselben Vorrichtung in der Draufsicht;
- Fig. 6: eine Flaschenweiche derselben Vorrichtung in einer vergrößerten Draufsicht;
- Fig. 7: die Flaschenweiche in grobschematischer Draufsicht;
- Fig. 8a, 8b, 8c: die Flaschenweiche in verschiedenen Weichenstellungen in der Draufsicht;
- Fig. 9: ein Flaschenpacktisch derselben Vorrichtung in der Draufsicht;
- Fig. 10: die Klappenmechanik desselben Flaschenpacktisches in geschlossenem Zustand in einer vergrößerten Perspektivansicht schräg von hinten und von der Seite;
- Fig. 11: dieselbe Klappenmechanik geöffnet in einer vergrößerten Perspektivansicht schräg von hinten und von der Seite;
- Fig. 12: Flaschenbahnen und Klappenmechanik desselben Flaschenpacktisches in einer vergrößerten Perspektivansicht schräg von hinten und von der Seite;
- Fig. 13: vergrößerte Einzelheit XIII von Fig. 12;
- Fig. 14a-d: Zentriereinheit für 0,33-Liter-Flaschen derselben Vorrichtung in einer Perspektivansicht schräg von hinten und von der Seite (Fig. 14a), einem Vertikalschnitt (Fig. 14b), einer Seitenansicht (Fig. 14c) und in der Unteransicht (Fig. 14d);
- Fig. 15: ein Satz Zentrierfinger derselben Zentriereinheit in einer Perspektivansicht schräg von oben und von der Seite;
- Fig. 16a-d: eine Zentriereinheit für 20 Flaschen á 0,5 Liter derselben Vorrichtung in einer Perspektivansicht schräg von hinten und von der Seite (Fig. 16a), einem Vertikalschnitt (Fig. 16b), einer Seitenansicht (Fig. 16c) und in der Unteransicht (Fig. 16d);
- Fig. 17: ein Satz Zentrierfinger derselben Zentriereinheit in einer Perspektivansicht schräg von oben und von der Seite;
- Fig. 18a-d: der Flaschenpacktisch mit Flaschenbahnsperre und Anschlagplatte in einer perspektivischen Teilansicht schräg von hinten und von der Seite (Fig. 18a), einem vergrößerten Detail B von Fig. 18, einer Draufsicht (Fig. 18c), einer Seitenansicht (Fig. 18d), einer Rückansicht (Fig. 18e) und in einem vergrößerten Detail F von Fig. 18c (Fig. 18f);
- Fig. 19a-c: dieselbe Flaschenbahnsperre in einer Perspektivansicht schräg von oben und von der Seite (Fig. 19a), einer Seitenansicht (Fig. 19b) und in der Draufsicht (Fig. 19c);
- Fig. 20a-b: dieselbe Anschlagplatte in einer Vorderansicht (Fig. 20a) und einer Draufsicht (Fig. 20b);
- Fig. 21a-c: Zentriereinheit für 24 Flaschen ä 0,33 Liter derselben Vorrichtung vor dem (Fig. 21a), beim (21b) und nach dem (Fig. 21c) Einfüllen von Flaschen in eine Flaschenkiste in einem Vertikalschnitt;
- Fig. 22a-b: Zentriereinheit für 20 Flaschen ä 0,5 Liter derselben Vorrichtung vor dem (Fig. 22a), beim (Fig. 22b) und nach dem (Fig. 22c) Einfüllen von Flaschen in eine Flaschenkiste in einem Vertikalschnitt;
- Fig. 23a+b: Hubtisch mit zwei Flaschenkisten in einer angehobenen Füllposition in einer Teilansicht von der Seite (Fig. 23a) und in abgesenkter Entnahmeposition in einer Teilansicht von der Seite (Fig. 23b);
- Fig. 24a+b: Hubtisch mit einer Trägerplatte in angehobener Befüllposition in einer Teilansicht von der Seite (Fig. 24a) und mit der Trägerplatte in abgesenkter Entnahmeposition in einer Teilansicht von der Seite (Fig. 24b);
- Fig. 25a-c: drei Aufstellvarianten der Vorrichtung in der Draufsicht;
- Fig. 26: ein alternativer Flaschentisch in einer Seitenansicht;
- Fig. 27: derselbe Flaschentisch in der Draufsicht.

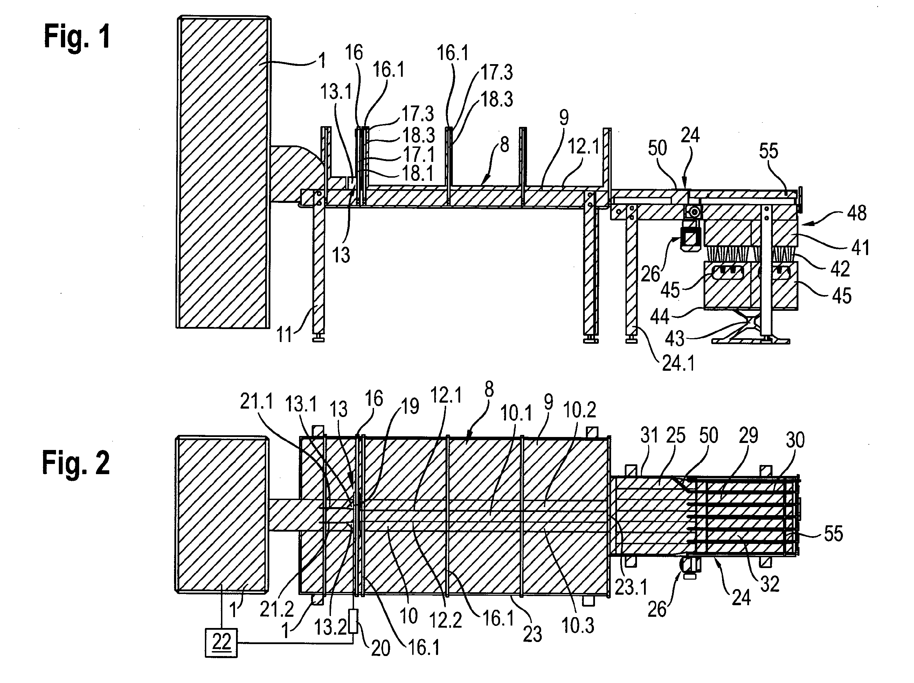

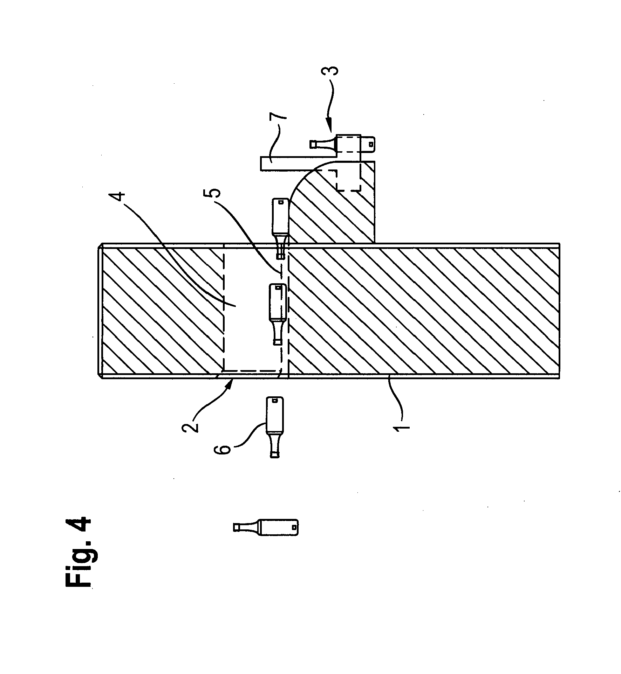

Gemäß Fig. 1 bis 4 umfasst eine erfindungsgemäße Vorrichtung einen Leergutautomat 1, der eine Flascheneingabe 2, eine Flaschenausgabe 3 und eine Flaschenerkennung 4 zwischen Flascheneingabe 2 und Flaschenausgabe 3 aufweist. Zudem weist der Leergutautomat 1 eine Transporteinrichtung 5 in Form von Transportbändern auf, welche Flaschen 6 von der Flascheneingabe 2 zur Flaschenausgabe 3 transportiert. Vorzugsweise sind einzelne Flaschen 6 vom Endverbraucher horizontal in die Flascheneingabe 2 einsetzbar und werden von der Transporteinrichtung 5 an der Flaschenerkennung 4 vorbeitransportiert. Am Ende der Transporteinrichtung fallen die Flaschen 6 durch eine schachtartige Flaschenführung 7 mit der Flaschenausgabe 3 am unteren Ende nach unten.

Ferner umfasst die Vorrichtung einen Flaschentisch 8. Der Flaschentisch 8 hat eine große Tischplatte 9 mit einem Förderband 10, das einen Antrieb mit Elektromotor und Getriebe zum Anreiben des Förderbandes 10 aufweist. Der obere Gurt des Förderbandes 10 befindet sich auf dem Niveau der Oberfläche der Tischplatte 9.

Die Tischplatte 9 einschließlich des Transportbandes 10 ist von mehreren Tischbeinen 11 getragen, die Nivelliereinrichtungen für die Nivellierung der Tischplatte 9 aufweisen.

Zentral über dem Förderband 10 sind zwei Seitengeländer 12.1, 12.2 angeordnet, die parallel zum Förderband verlaufen und einen Zentralbereich 10.1 und Seitenbereiche 10.2, 10.3 des Förderbandes 10 voneinander trennen. Die Seitengeländer 12.1, 12.2 sind so ausgebildet, dass sie Flaschen 6 an einem Übertritt zwischen den Zentral- und Seitenbereichen 10.1, 10.2, 10.3 hindern.

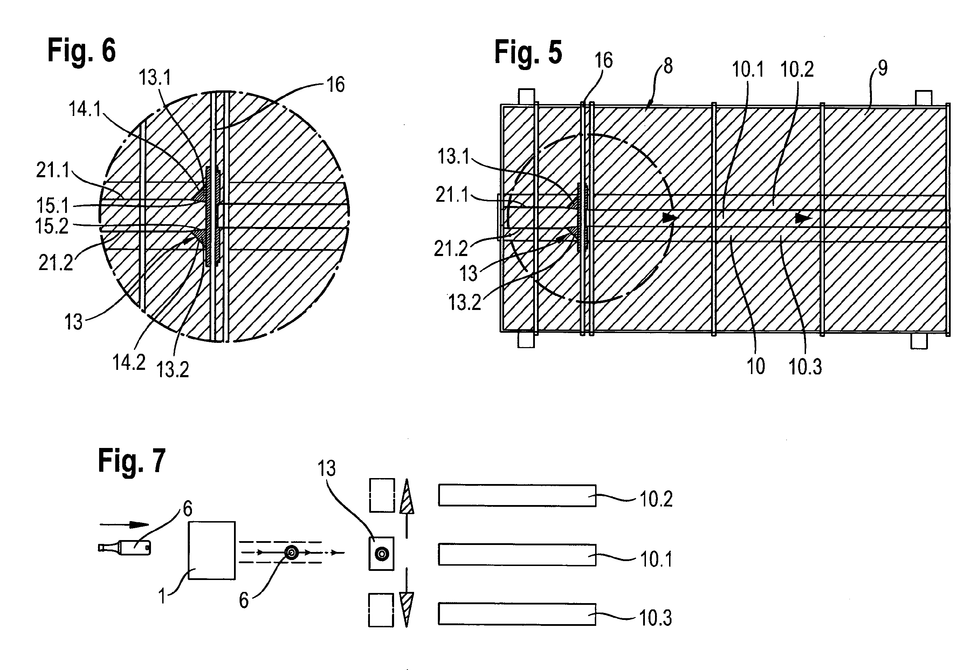

Im vorderen Teil des Förderbandes 10 ist eine Flaschenweiche 13 angeordnet. Die Flaschenweiche 13 weist zwei Weichenbauteile 13.1, 13.2 auf, die einen Abstand voneinander aufweisen, der etwa dem Abstand zwischen den Seitengeländern 12.1, 12.2 entspricht. Gemäß Fig. 5 bis 8 haben die Weichenbauteile 13.1, 13.2 äußere Leitflächen 14.1, 14.2 auf voneinander abgewandten Seiten und innere Leitflächen 15.1, 15.2 auf voneinander zugewandten Seiten. Die äußeren Leitflächen 14.1, 14.2 schließen einen spitzen Winkel von z.B. 45° mit der Längsachse des Förderbandes 10 ein, wobei der Abstand der beiden äußeren Leitflächen 14.1, 14.2 voneinander in Förderrichtung des Förderbandes 10 zunimmt. Die inneren Leitflächen 15.1, 15.2 verlaufen parallel zum Förderband 10 oder schließen einen kleinen spitzen Winkel mit dem Förderband 10 von z.B. 5° bis 10° ein, wobei der Abstand zwischen den inneren Leitflächen 15.1, 15.2 in Förderrichtung des Förderbandes 10 abnimmt.

Die Weichenbauteile 13.1, 13.2 sind an einer senkrecht zur Förderrichtung des Förderbandes 10 gerichteten Führung 16 gelagert und entlang dieser Führung 16 verlagerbar. Die Führung 16 ist von einer Traverse gebildet, die den Flaschenabgabetisch 8 überspannt und an den beiden Längsseiten des Flaschenabgabetisches auf Pfosten 17.1, 17.2 gehalten ist. Die Weichenbauteile sind über Stangen 18.1, 18.2 mit einem Lagerbauteil 19 verbunden, das entlang der Führung 16 verlagerbar ist.

Mittels eines Aktors 20 z.B. in Form eines Pneumatikzylinders sind die Weichenbauteile 14, 15 senkrecht zum Förderband 10 verlagerbar (Fig. 2).

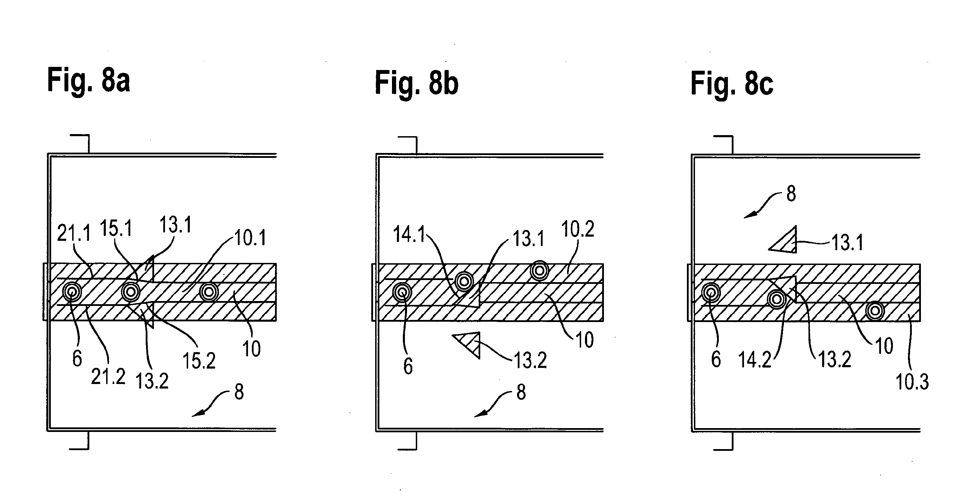

Mittels des Aktors 20 ist die Flaschenweiche 13 in eine erste Weichenstellung in der Mitte über dem Förderband 10 gemäß Fig. 5, 6 und 8a, in eine zweite Weichenstellung auf der einen Seite des Förderbandes 10 gemäß Fig. 8b und in eine dritte Weichenstellung auf der anderen Seite des Förderbandes 10 gemäß Fig. 8c einstellbar.

Zwischen der Flaschenausgabe 3 und der Flaschenweiche 13 stehen zentral über dem Förderband zwei vordere Seitengeländer 21.1, 21.2 hoch. Der Abstand zwischen den vorderen Seitengeländern 21.1, 21.2 übersteigt geringfügig den Abstand zwischen den Seitengeländern 12.1, 12.2. Infolgedessen sind die hinteren Enden der vorderen Seitengeländer 21.1, 21.2 auf die vorderen Enden der inneren Leitflächen 15.1, 15.2 ausgerichtet, wenn die Flaschenweiche in der mittleren Position angeordnet ist.

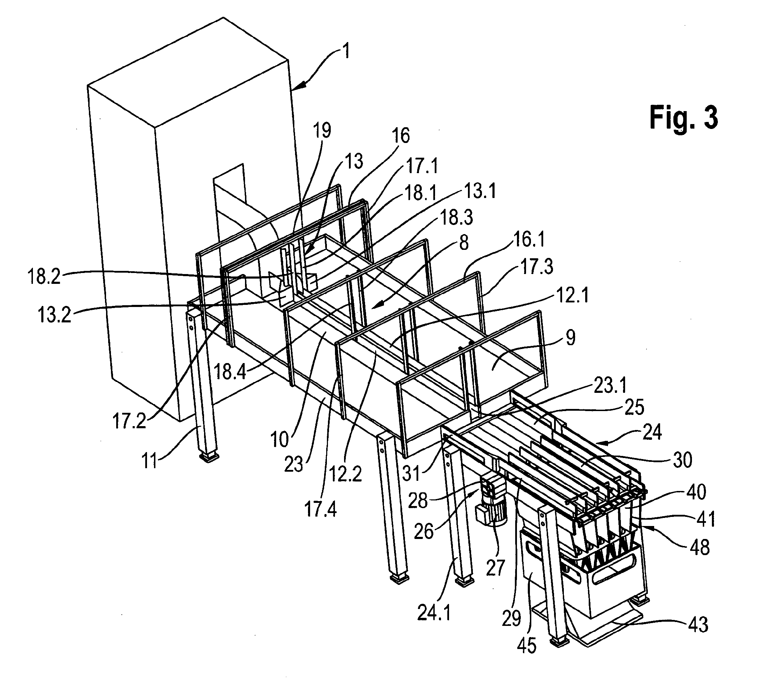

Die Seitengeländer 12.1, 12.2 und die vorderen Geländer 21.1, 21.2 sind ebenfalls über vertikale Stangen 18.3, 18.4 an horizontalen Traversen 16.1 gehalten. Die Traversen 16.1 sind oberhalb der Tischplatte 9 mittels Pfosten 17.3, 17.4 gehalten, die an den seitlichen Rändern des Flaschentischs 8 befestigt sind (Fig. 3). Durch die Anordnung der Flaschenweiche 13 und der Seitengeländer 12.1, 12.2 und vorderen Seitengeländer 21.1, 21.2 an horizontalen Traversen, welche in einem Abstand oberhalb der Tischplatte 9 gehalten sind, wird ein Nachrüsten eines Flaschenabgabetisches zu einer erfindungsgemäßen Vorrichtung erleichtert.

Eine durch die Flaschenausgabe 3 auf das Förderband 10 aufgesetzte Flasche 6 wird von diesem zwischen den vorderen Seitengeländern 21,1, 21.2 hindurch der Flaschenweiche 13 zugeführt. In der ersten Weichenstellung der Flaschenweiche 13 wird die Flasche 6 gemäß Fig. 8a von den inneren Leitflächen 15.1, 15.2 der Flaschenweiche 13 zwischen die Seitengeländer 12.1, 12.2 geleitet und auf dem Zentralbereich 10.1 weiter zum hinteren Ende des Flaschentisches 8 transportiert. In der zweiten Weichenstellung der Flaschenweiche 13 wird die Flasche 6 gemäß Fig. 8b von der äußeren Leitfläche 14.1 des Weichenbauteiles 13.1 zum Seitenbereich 10.2 des Förderbandes 10 hin abgelenkt und darauf zum hinteren Ende des Flaschentisches 8 hin transportiert. In der dritten Weichenstellung der Flaschenweiche 13 wird die Flasche 6 gemäß Fig. 8c von der äußeren Leitfläche 14.2 des anderen Weichenbauteiles 13.2 zum Seitenbereich 10.3 des Förderbandes 10 hin abgelenkt und darauf zum hinteren Ende des Flaschentisches 8 hin transportiert.

Die Vorrichtung umfasst eine Steuerungseinrichtung 22, die mit der Flaschenerkennung 4 und mit dem Aktor 20 verbunden sind (Fig. 2). Wenn die Flaschenerkennung 4 den bestimmten Flaschentypen (z.B. eine NRW-0,5 Liter-Flasche) erkennt, steuert die Steuerungseinrichtung 22 den Aktor 20 so, dass dieser die Flaschenweiche 13 in die erste Weichenstellung verlagert.

Die Steuerungseinrichtung 22 steuert den Aktor 20 so, dass dieser die Flaschenweiche 13 in die zweite Weichenstellung verlagert, falls die Flaschenerkennung 4 erkennt, dass die Flasche von einem oder mehreren anderen bestimmten Flaschentypen ist, die vom Leergutautomaten 1 akzeptiert werden, z.B. PET-Flaschen.

Schließlich steuert die Steuerungseinrichtung 22 den Aktor 20 so, dass die Flaschenweiche 14 in die dritte Weichenstellung verlagert wird, wenn die Flaschenerkennung 4 Flaschentypen erkennt, die vom Leergutautomaten 1 akzeptiert werden, jedoch nicht zu den bestimmten Flaschentypen (NRW 0,51-Flasche und PET-Flaschen) gehören.

Im Beispiel werden somit die NRW-0,51-Flaschen auf dem Zentralbereich 10.1 des Förderbandes 10 weitertransportiert, PET-Flaschen auf dem einen Seitenbereich 10.2 des

Förderbandes 10 weitertransportiert und die übrigen Flaschen auf dem anderen Seitenbereich 10.3 weitertransportiert.

Falls die Flaschenerkennung 4 den Flaschentypen nicht erkennt oder einen Flaschentypen erkennt, der nicht akzeptiert wird, gibt der Leergutautomat 1 die Flasche durch die Flascheneingabe 2 wieder aus und belässt vorzugsweise die Steuerungseinrichtung 22 die Flaschenweiche 13 in ihrer bisherigen Weichenstellung.

Gemäß Fig. 1 bis 3 hat der Flaschentisch 8 hat am äußeren Rand ein Außengeländer 23, das Flaschen 6 daran hindert, vom Flaschentisch 8 herunterzufallen. Am hinteren Ende des Zentralbereichs 10.1 hat das Außengeländer 23 ein Austrittstor 23.1, durch das auf dem Zentralbereich 10.1 des Förderbandes 10 transportierte Flaschen 6 auf einen Flaschenpacktisch 24 austreten können, der am hinteren Ende des Flaschentisches 10 angeordnet ist. Auf den Seitenbereichen 10.2, 10.3 des Förderbandes 10 transportierte Flaschen werden hingegen von dem Außengeländer 23 auf dem Flaschentisch 8 zurückgehalten und sammeln sich am hinteren Ende des Flaschentisches 8 an. Dort können sie händisch in Ladungsträger eingesetzt werden.

Der Flaschenpacktisch 24 weist im vorderen Teil mehrere parallele weitere Förderbänder 25 auf, im Beispiel sind es 7. Die weiteren Förderbänder 25 haben einen gemeinsamen Antrieb 26, der einen Elektromotor 27 und ein Getriebe 28 umfasst.

Ferner hat der Flaschenpacktisch 24 in seinem hinteren Teil parallele Flaschenbahnen 29, die durch vom Flaschenpacktisch 24 hochstehende weitere Seitengeländer 30 voneinander getrennt sind. Die Flaschenbahnen 29 erstrecken sich in Richtung der weiteren Förderbänder 25. Die weiteren Seitengeländer 30 überlappen den hinteren Endbereich der weiteren Förderbänder 25. Im Beispiel sind sechs Flaschenbahnen 29 (auch "Flaschenfächer" genannt) vorhanden. Die weiteren Seitengeländer 30 sind so ausgebildet, dass sie einen Übertritt von Flaschen 6 zwischen benachbarten Flaschenbahnen 29 verhindern. Der Abstand benachbarter weiterer Seitengeländer 30 voneinander ist so gewählt, dass die bestimmten Flaschen 6 zwischen benachbarten weiteren Seitengeländern 30 geführt werden.

Vom äußeren Rand des Flaschenpacktisches 24 steht ein weiteres Außengeländer 31 nach oben hervor, das Flaschen 6 daran hindert, an den Seiten herunterzufallen. Das weitere Außengeländer 31 ist vorzugsweise nur an den Längsseiten und am hinteren Ende des Flaschenpacktisches 24 vorhanden. Vorn ist der Flaschenpacktisch 24 zum hinteren Ende des Flaschentisches 8 hin geöffnet.

Der Flaschenpacktisch 24 hat vier Standfüße 24.1, vorzugsweise mit Nivelliereinrichtungen.

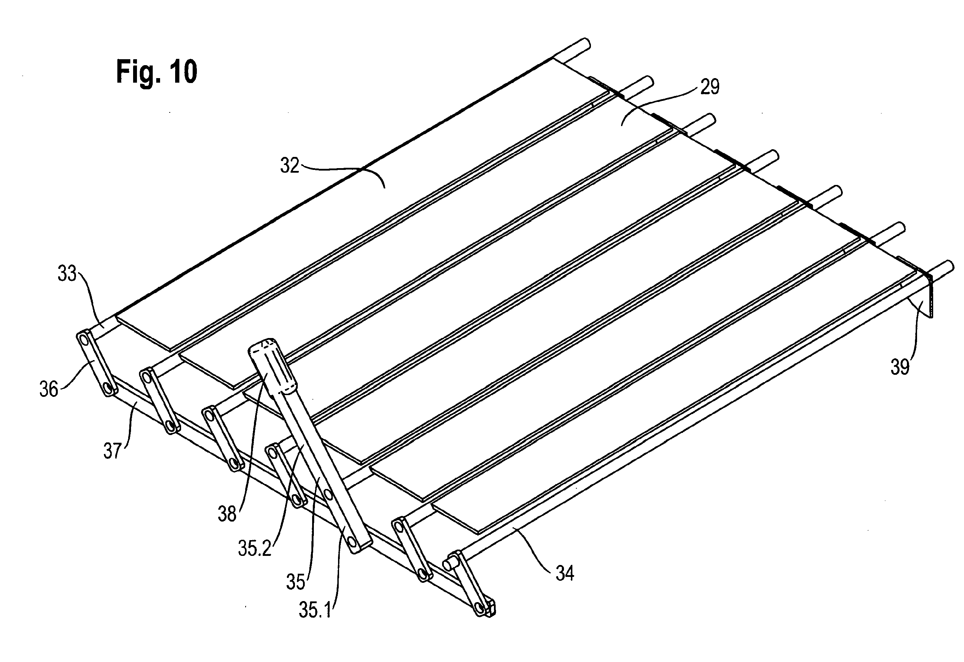

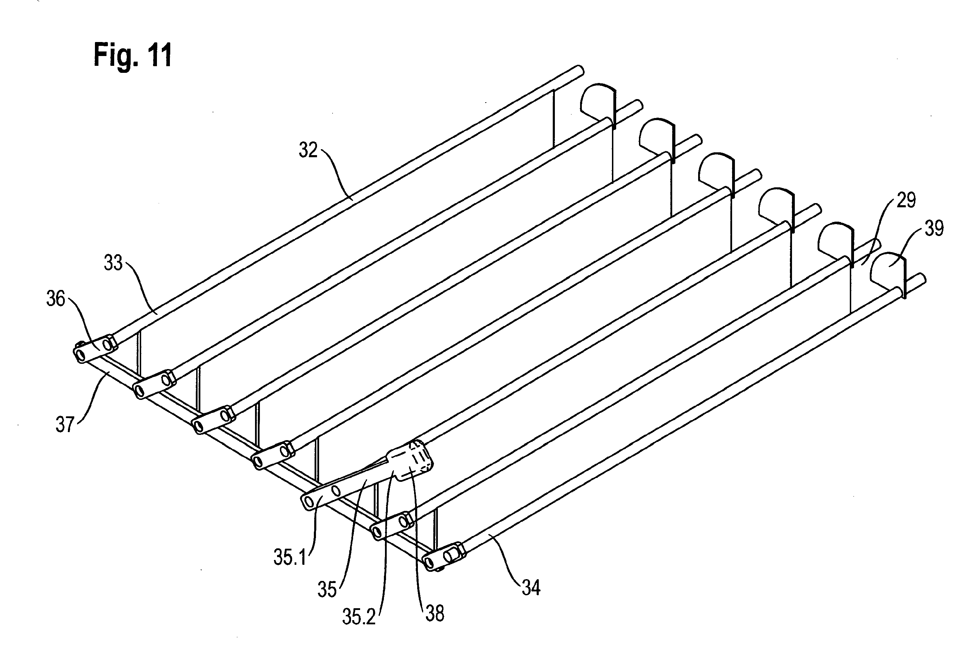

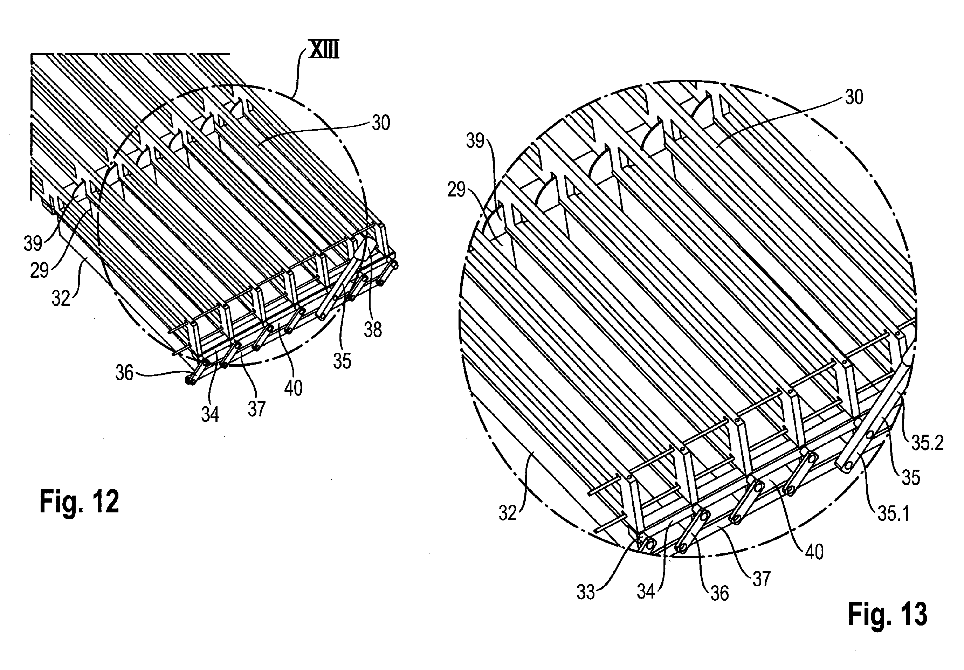

Unter den Flaschenbahnen 29 befinden sich Verschlusseinrichtungen in Form von Verschlussklappen 32, die in den Fig. 10 bis 13 gezeigt sind. Jede Verschlussklappe 32 erstreckt sich nahezu über die gesamte Länge einer Flaschenbahn 29 und ist an einer Längsseite an einer Lagerwelle 33 fixiert, die drehbar an einem Rahmen 34 gelagert ist, der am Flaschenpacktisch 24 fixiert ist. Sechs Verschlussklappen 32 sind an sechs Lagerwellen 33 fixiert. Eine siebte Lagerwelle 34, die in Fig. 10 und 11 vorn abgebildet ist, ist nicht mit einer Verschlussklappe versehen.

Auf einem Ende einer Lagerwelle 33 ist ein zweiarmiger Betätigungshebel 35 fixiert. Mit den entsprechenden Enden der übrigen Lagerwellen 33 ist jeweils eine Kurbelstange 36 fest verbunden. Die Kurbelstangen 36 sind jeweils an ihren anderen Enden gelenkig mit einer Schubstange 37 verbunden. Ein Hebelarm 35.1 des Betätigungshebels 35 ist ebenfalls gelenkig mit der Schubstange 37 verbunden. Der andere Hebelarm 35.2 des Betätigungshebels 35 dient als Betätigungsarm zum Verstellen der Verschlussklappen 32. Er ist mit einem Handgriff 38 versehen.

An den entgegengesetzten Enden von sechs Lagerwellen 33 ist jeweils eine Rückhalteeinrichtung in Form eines Rückhaltefingers 39 fixiert. Jeder Rückhaltefinger 39 ist als Viertelkreisscheibe ausgeführt. Die hinterste Lagerwelle 33 in Fig. 10 und 11 ist nicht mit einem Rückhaltefinger bestückt.

In der in Fig. 10 gezeigten Schließstellung ist jede Verschlussklappe 32 horizontal ausgerichtet und bildet den Boden einer Flaschenbahn 29. Die Rückhaltefinger 39 sind in die Freigabestellung unter die Ebene der Verschlussklappen 32 geschwenkt.

Gemäß Fig. 11, 12 und 13 sind die Verschlussklappen 32 durch Betätigen des Betätigungshebels 35 im Uhrzeigersinn um 90° nach unten in die Öffnungsstellung geschwenkt. Die Rückhaltefinger 39 sind in die Rückhaltestellung in die Flaschenbahnen 29 geschwenkt.

Gemäß Fig. 1, 3, 14, 16 und 18 sind unterhalb der Flaschenbahnen 29 Fallschächte 40 angeordnet, die durch Führungsbleche 41 begrenzt sind. Am unteren Ende der Fallschächte 40 sind weitere Führungseinrichtungen in Form von Zentrierfingern 42 vorhanden.

Darunter befindet sich ein Hubtisch 43, dessen Arbeitsfläche 44 ein Lagerplatz für Ladungsträger 45 für Flaschen 6 ist.

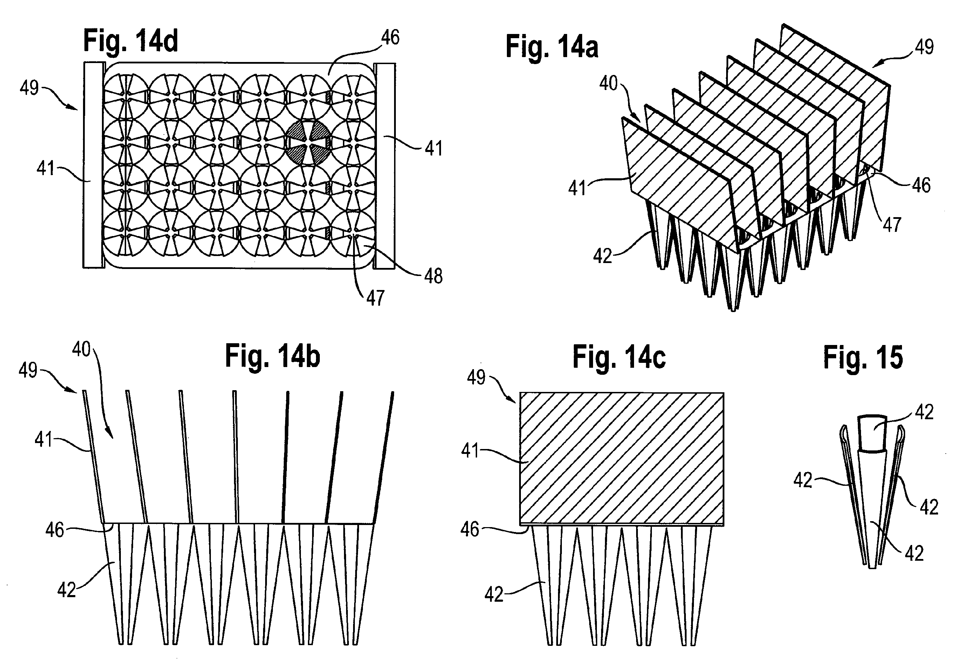

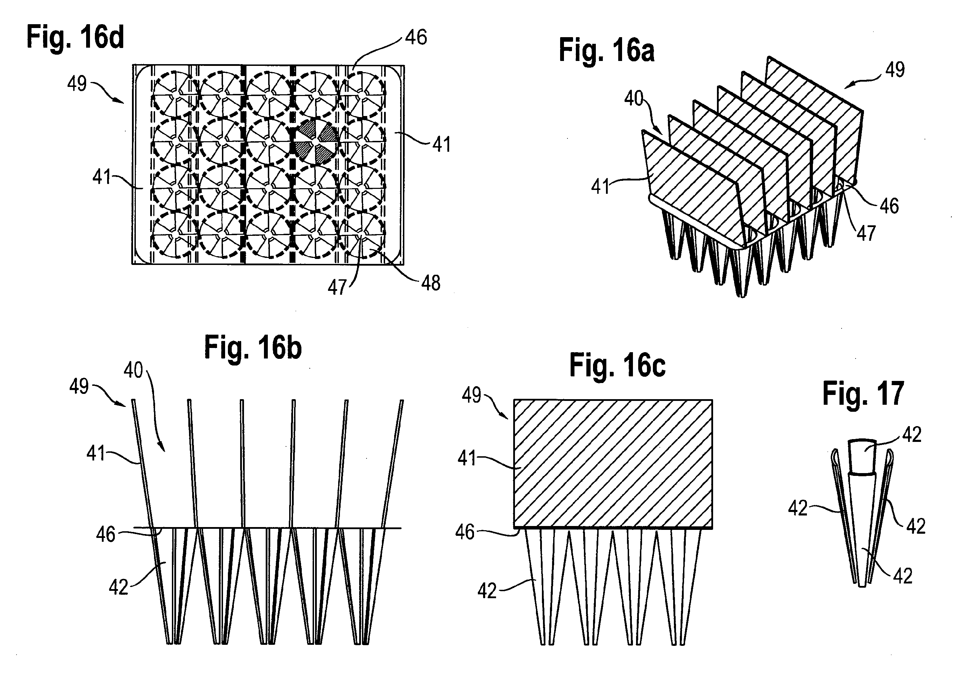

Gemäß Fig. 14 und 16 begrenzen jeweils zwei Führungsbleche 41 unterhalb einer Flaschenbahn 29 einen Fallschacht 40. Die Fallschächte 40 sind geneigt, sodass ihre Austrittsöffnungen am unteren Ende enger zusammengerückt sind als ihre Eintrittsöffnungen am oberen Ende.

Unten sind die sechs (in Fig. 14) oder fünf (in Fig. 16) Fallschächte 40 durch eine Lochplatte 46 begrenzt, die unter jedem Fallschacht 40 jeweils vier Austrittslöcher 47 hat. Jedes Austrittsloch 47 ist unten von einer Gruppe von z.B. vier Zentrierfingern 42 umgeben. Hierbei handelt es sich um Zentrierfinger 42 aus einem elastischen oder weichelastischen Kunststoff oder anderem Material, deren Abstand nach unten abnimmt. Hierfür haben beispielsweise die Zentrierfinger 42 jeweils die Form eines Segments einer Kegelmantelfläche, wie in Fig. 15 und 17 gezeigt.

Fig. 14 zeigt eine Zentriereinheit 48 für 24 Flaschen á 0,33 Liter. Fig. 16 zeigt eine Zentriereinheit 49 für 20 Flaschen á 0,5 Liter. Gemäß Fig. 1, 18a, b und 23, 24 sind unter den Flaschenbahnen 29 zwei Zentriereinheiten 48 gemäß Fig. 14 oder 16 angeordnet.

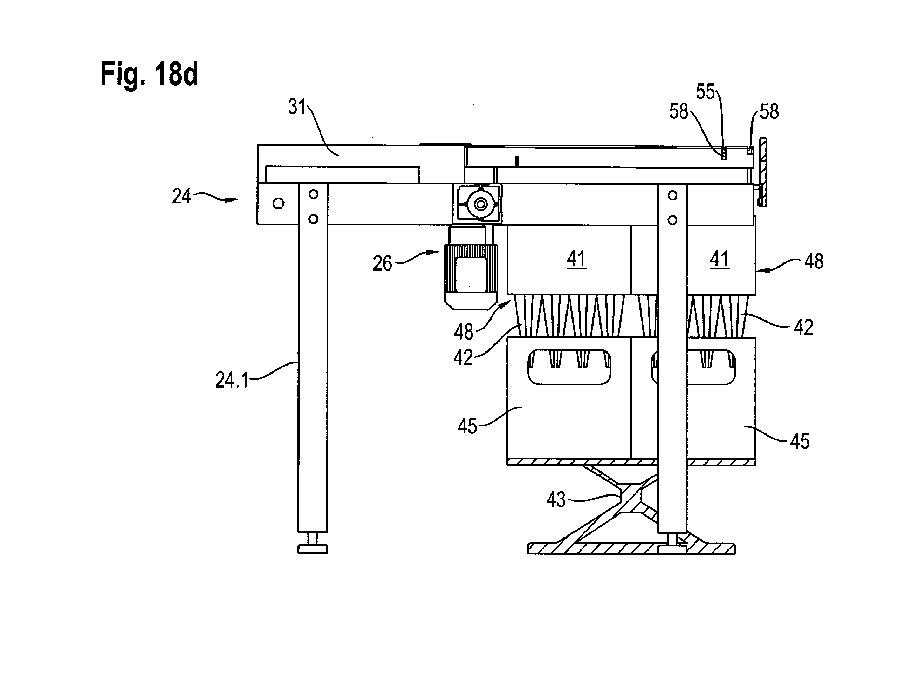

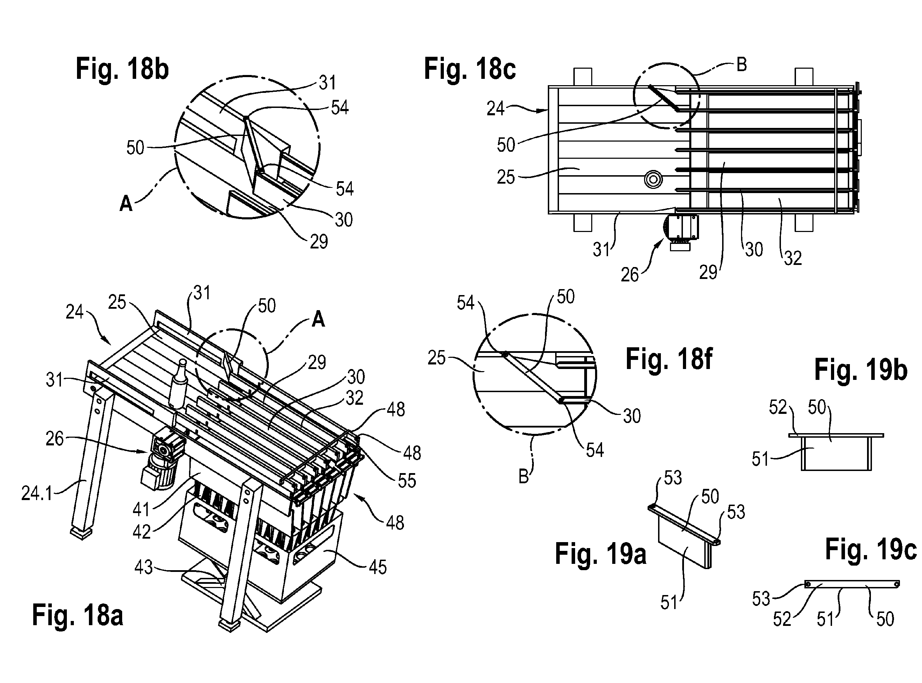

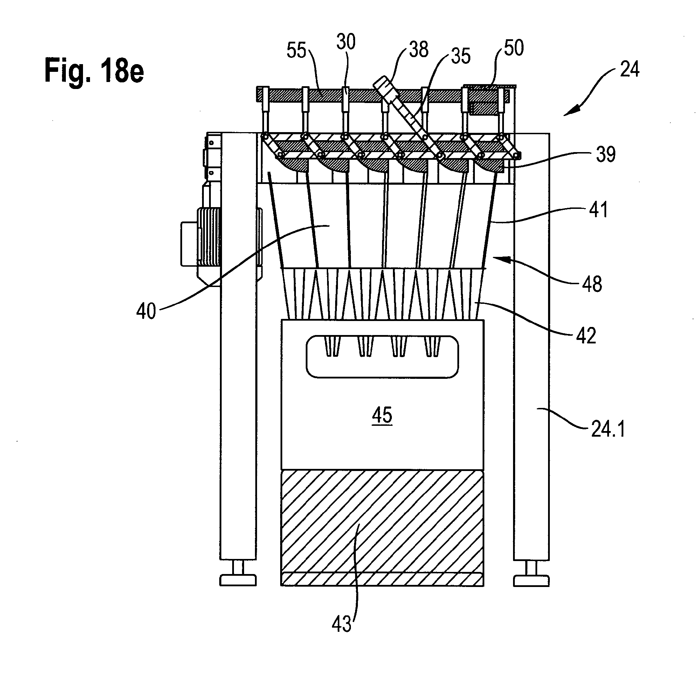

Die Vorrichtung zum Sortieren von Flaschen kann von vornherein so ausgebildet sein, dass sie ausschließlich Zentriereinheiten 48 für 24 Flaschen á 0,33 Liter aufweist oder ausschließlich Zentriereinheiten 49 für 20 Flaschen á 0,5 Liter. Bei der vorliegenden Ausführungsform werden Zentriereinheiten 48 für beide Flaschentypen verwendet, indem eine Flaschenbahn 29 mittels einer wahlweise vorn an der Flaschenbahn 29 anbringbaren Flaschenbahnsperre 50 absperrbar ist. Die Flaschenbahnsperre 50 ist im montierten Zustand in Fig. 2 und 18 gezeigt. Gemäß Fig. 18 und 19 besteht die Flaschenbahnsperre 50 aus einer Platte 51 mit einer Traverse 52 an der Oberseite, die an den Enden vertikale Löcher 53 zur Aufnahme von Steckzapfen 54 aufweist. Die Steckzapfen 54 stehen von den oberen Rändern des weiteren Außengeländers 31 und des benachbarten weiteren Seitengeländers 30 vor. Die Flaschenbahnsperre 50 wird mit den Löchern 53 auf die Steckzapfen 54 aufgesteckt, sodass sie spitzwinklig bezüglich des weiteren Außengeländers 31 geneigt ist.

Bei montierter Flaschenbahnsperre 50 können die weiteren Förderbänder 25 nur in die fünf geöffneten Flaschenbahnen 29 Flaschen 6 hineintransportieren und nicht in die gesperrte Flaschenbahn 29. Infolgedessen arbeiten die Zentriereinheiten 48 jeweils als Zentriereinheit für 20 Flaschen á 0,5 Liter. Wenn die Flaschenbahnsperre 50 entfernt ist, können die weiteren Förderbänder 25 Flaschen 6 in sämtliche Flaschenbahnen 29 hineinfördern, sodass die Zentriereinheiten 48 jeweils als Zentriereinheiten für 24 Flaschen á 0,33 Liter arbeiten können.

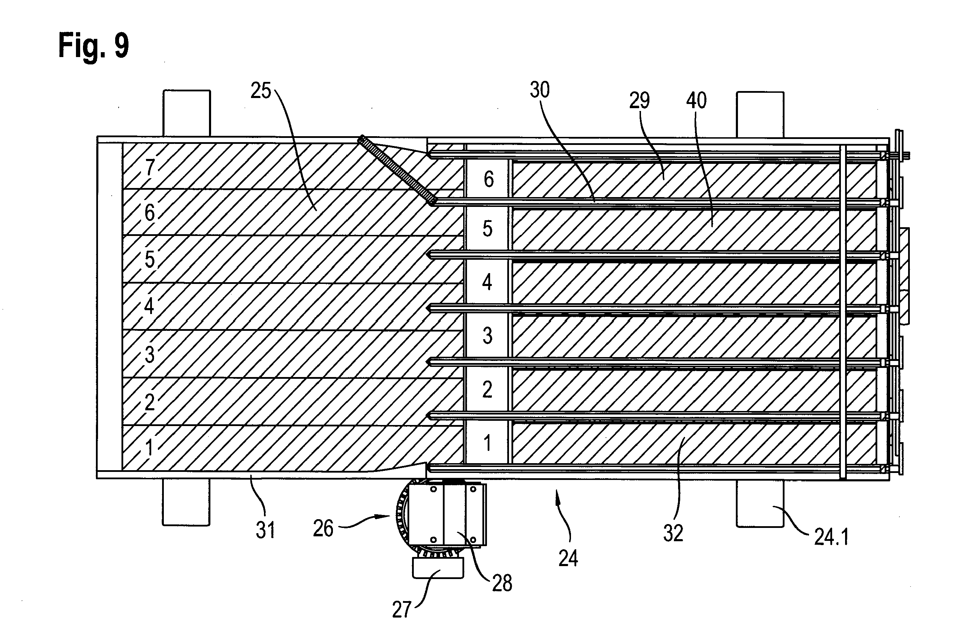

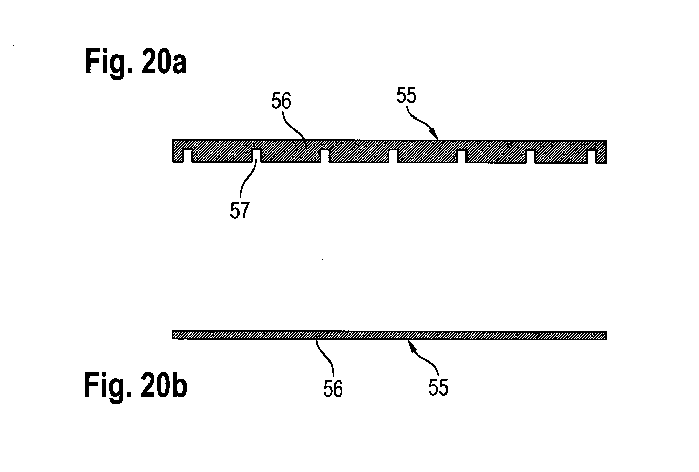

Ferner weist der Flaschenpacktisch 24 ein Formatteil 55 zum wahlweisen Einstellen der Flaschenfachgrößen der Flaschenbahnen 29 auf 0,5 Liter- und 0,33 Liter-Flaschen auf. Das Formatteil 55 ist in den Fig. 1 bis 3, 9, 18 und 20 gezeigt. Es umfasst eine Anschlagplatte 56, die an der Unterseite Nuten 57 aufweist, die in zwei Positionen in weitere Nuten 58 an den oberen Rändern der weiteren Seitengeländer 30 einhängbar ist. In den Figuren ist die Anschlagplatte 56 in die vorderen weiteren Nuten 58 eingehängt, um für 0,33 Liter-Flaschen eine kürzere Länge der Flaschenfächer zu verwirklichen. Durch Einsetzen des Formatteils 55 in die weiteren Nuten 58, die sich näher am hinteren Ende der Flaschenbahnen 29 befinden, können Flaschenfächer für 0,5 Liter-Flaschen bereitgestellt werden.

Der Flaschenpacktisch 24 kann als Flaschenpackmodul ausgebildet sein, das an eine bestehende Sortieranlage angebaut wird.

Beim Betrieb der Vorrichtung zum Sortieren von Flaschen werden einzelne Flaschen 6 in den Leergutrücknahmeautomaten 1 eingegeben. Wenn die Flaschenerkennung 4 die Flaschen 6 erkennt, verlagert die Steuereinrichtung 22 die Flaschenweiche 13 in Abhängigkeit vom erkannten Flaschentyp in die erste, zweite oder dritte Weichenstellung, wie oben beschrieben. Das Förderband 10 läuft entweder permanent oder wird für eine bestimmte Zeitspanne in Bewegung gesetzt, wenn der Leergutautomat 1 Flaschen akzeptiert und nicht zurückweist.

Aus der Flaschenausgabe 3 gelangen die akzeptierten Flaschen 6 in vertikaler Ausrichtung mit dem Flaschenboden unten auf das Förderband 10. Das Förderband 10 transportiert die Flaschen 6 zur Flaschenweiche 13.

Wenn sich die Flaschenweiche 13 in der ersten Weichenstellung befindet, werden die Flaschen 6 auf dem Zentralbereich 10.1 des Förderbandes 10 zwischen den Seitengeländern 12.1, 12.2 zum Flaschenpacktisch 24 transportiert. Dort werden sie von den weiteren Förderbändern 25 nach hinten zu den Flaschenbahnen 29 transportiert, die sie allmählich auffüllen. Hierbei befinden sich die Verschlussklappen 32 in der Schließstellung.

Wenn eine Flaschenbahn 29 vollständig mit Flaschen 6 befüllt ist, werden nachfolgende Flaschen 6 in benachbarte Flaschenbahnen 29 weitergeleitet und füllen diese auf.

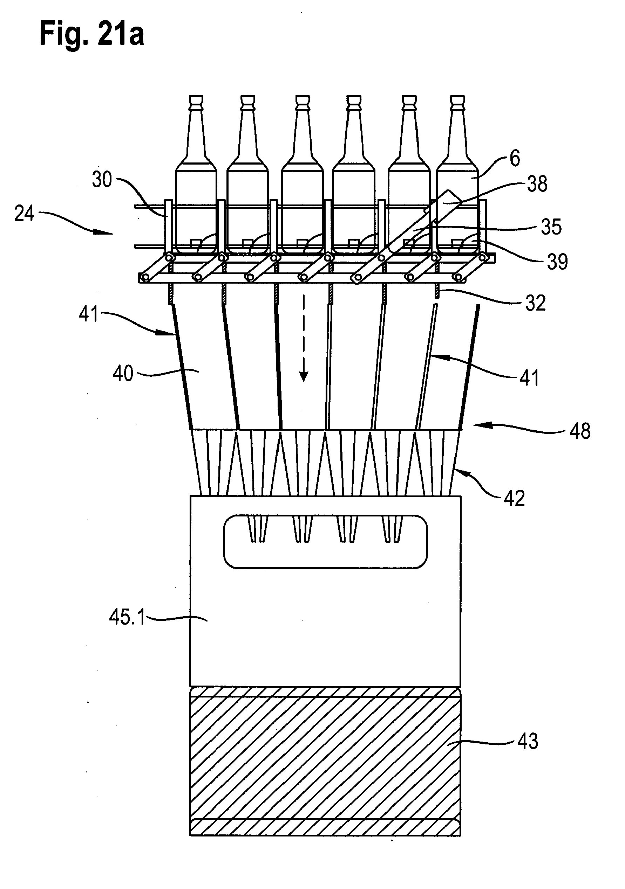

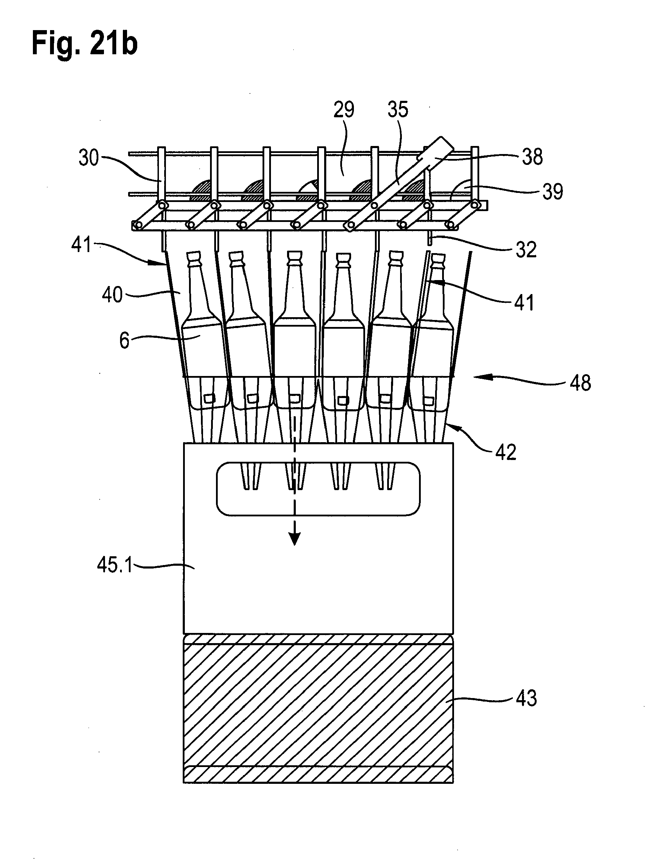

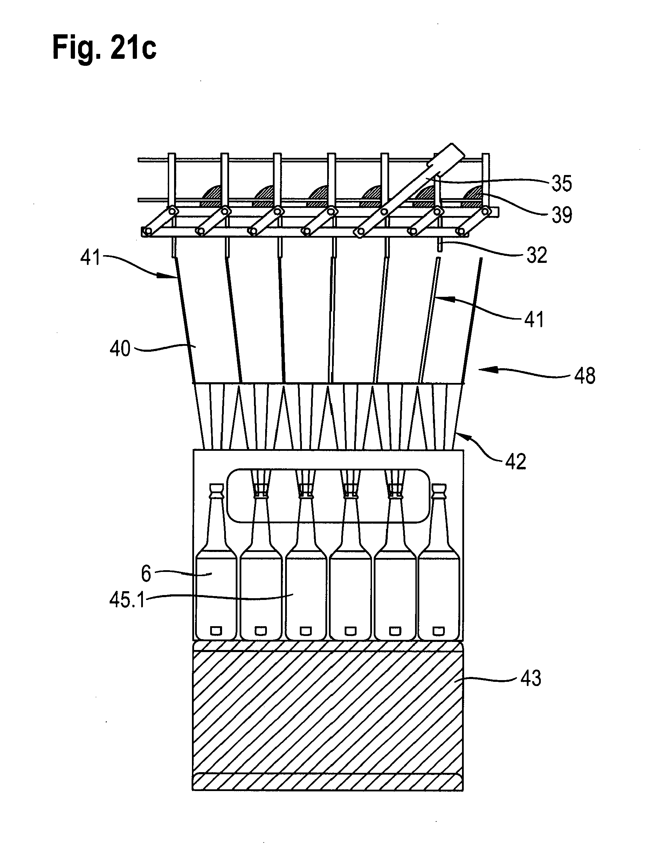

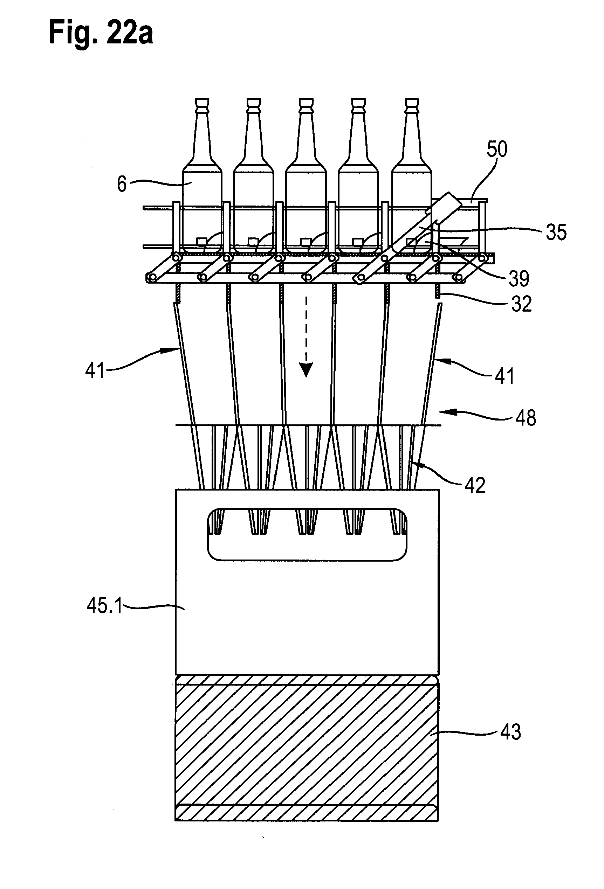

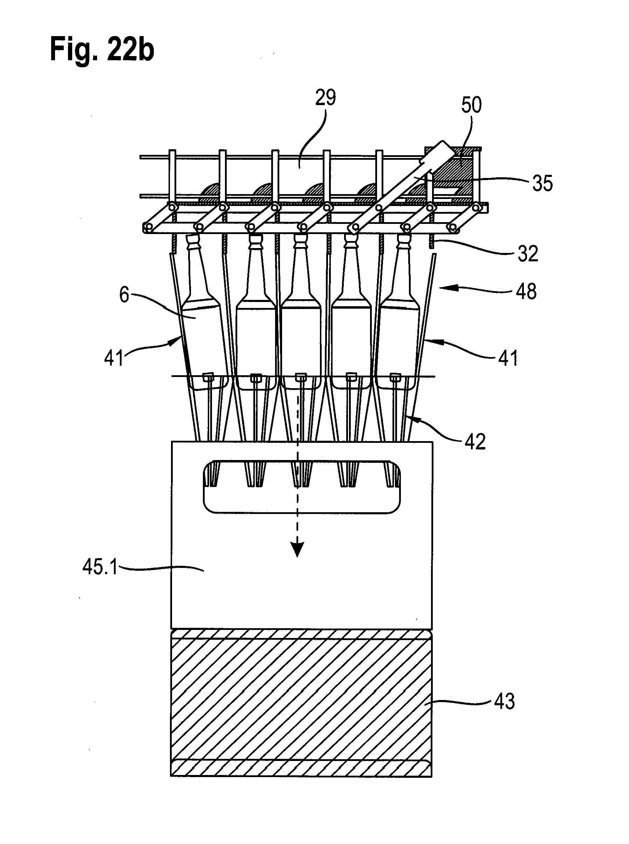

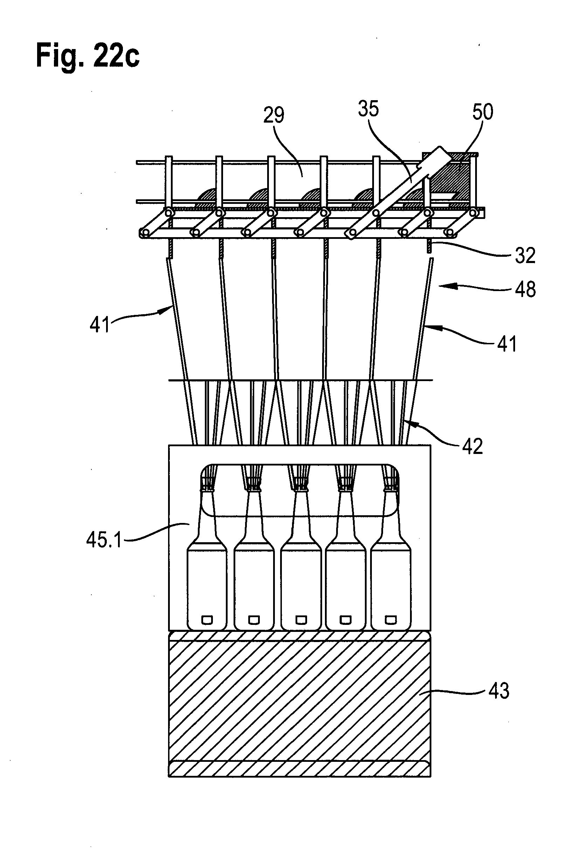

Wenn sämtliche Flaschenbahnen 29 mit Flaschen 6 vom vorgegebenen Typ gefüllt sind, können diese vom Bedienpersonal in Flaschenkisten 45.1 gegeben werden, die auf einem Hubtisch 43 bereitstehen. Hierfür wird manuell der Betätigungshebel 35 im Uhrzeigersinn geschwenkt, sodass die Verschlussklappen 32 nach unten und die Rückhaltefinger 39 in die Flaschenbahnen 29 verschwenken. Dies ist in Fig. 21a und b für 0,33 Liter-Flaschen und in Fig. 22a und b für 0,5 Liter-Flaschen gezeigt. Die Flaschen 6 werden durch die Fallschächte 40 enger zusammengeführt und mittels der Zentrierfinger 42 in die Flaschenkisten 45.1 eingespeist, sodass jede Flasche 6 einen Stellplatz einer Flaschenkiste 45.1 einnimmt. Hierbei ragen die Zentrierfinger 42 in die Flaschenkisten 45.1 hinein, um die Flaschen 6 möglichst genau auf den Stellplätzen zu positionieren.

Gemäß Fig. 21b werden beim Einfüllen von 0,33 Liter-Flaschen in Flaschenkisten 45.1 sämtliche Flaschenbahnen 29 benutzt und gemäß Fig. 22b werden beim Einfüllen von 0,5 Liter-Flaschen in Flaschenkisten 45.1 nur fünf Flaschenbahnen 29 benutzt und ist eine Flaschenbahn 29 durch die Flaschenbahnsperre 50 gesperrt.

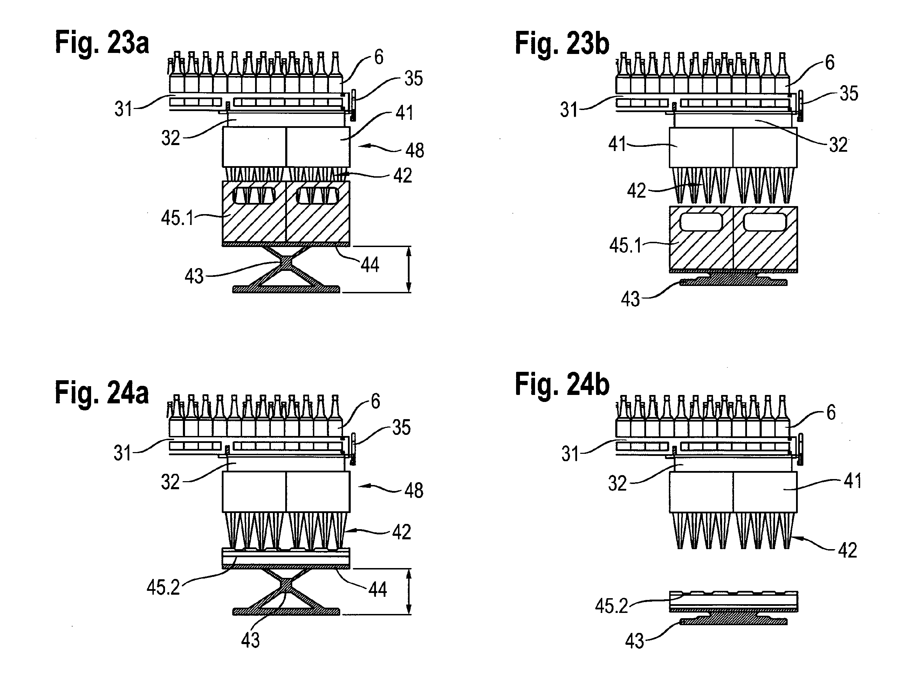

Gemäß Fig. 23 sind die befüllten Flaschenkisten 45.1 nach Herunterfahren des Hubtisches 43 entnehmbar bzw. sind unbefüllte Getränkekisten 45.1 bei heruntergefahrenem Hubtisch 43 auf den Lagerplatz 44 des Hubtisches 43 aufsetzbar.

Gemäß Fig. 24 sind statt der beiden Flaschenkisten 45.1 Trägerplatten 45.2 mit Flaschen 6 befüllbar. Hierbei handelt es sich entweder um Trägerplatten 45.2 für 48 0,33-Liter-Flaschen oder für 40 0,5-Liter-Flaschen. Beim Befüllen ist der Hubtisch 43 so weit angehoben, dass sich die Zentrierfinger 42 kurz vor den Stellplätzen der Trägerplatten 45.2 befinden. Zum Abnehmen der befüllten Trägerplatten 45.2 bzw. zum Aufsetzen unbefüllter Trägerplatten 45.2 auf den Lagerplatz 44 wird der Hubtisch 43 gemäß Fig. 24b abgesenkt.

Wenn die Flaschenweiche 13 in der zweiten oder dritten Weichenstellung angeordnet ist, werden vom Förderband 10 zur Flaschenweiche 13 transportierte Flaschen auf einem der beiden Seitenbereiche 10.2, 10.3 des Förderbandes 10 zum hinteren Ende des Flaschentisches 8 transportiert und aufgestaut (Fig. 1). Am hinteren Ende des Flaschentisches 8 können sie händisch eingesammelt und in Ladungsträger für Flaschen eingesetzt werden.

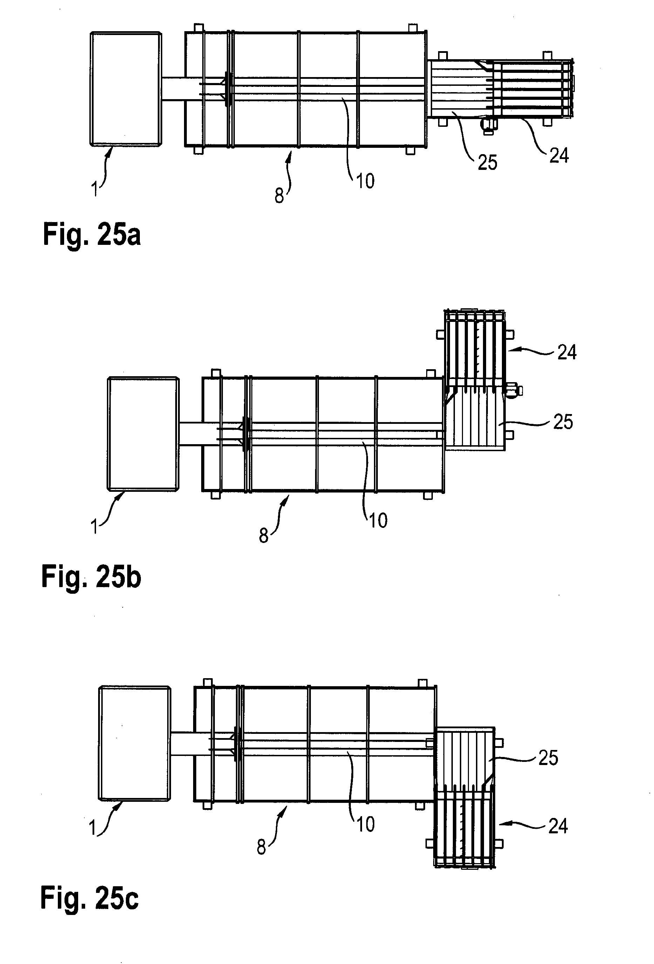

Fig. 25 zeigt verschiedene Anordnungen von Flaschentisch 8 und Flaschenpacktisch 24, die je nach den gegebenen baulichen Möglichkeiten in der jeweiligen Flaschensammelstelle gewählt werden können. Gemäß Fig. 25a erstrecken sich die weiteren Förderbänder 25 des Flaschenpacktisches 24 parallel zum Förderband 10 des Flaschentisches 8. Gemäß Fig. 25b und 25c sind sie jeweils in verschiedenen Richtungen senkrecht zum Förderband 10 des Flaschentisches 8 ausgerichtet.

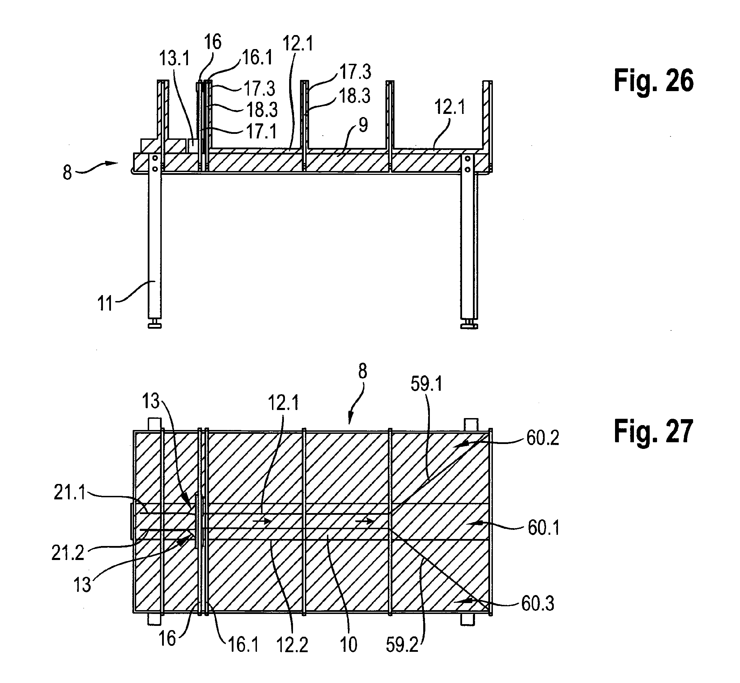

Fig. 26 und 27 zeigen eine vereinfachte Ausführung der Vorrichtung zum Sortieren von Leergut, bei dem sich an die hinteren Enden der parallelen Seitengeländer 12.1, 12.2 hintere Seitengeländer 59.1, 59.2 anschließen, deren Abstand voneinander in Förderrichtung des Förderbandes 10 zunimmt. Die hinteren Seitengeländer 59.1, 59.2 sind ebenfalls mittels Stangen 18.3, 18.4, Traversen 16.1 und Pfosten 17.3, 17.4 am Flaschentisch 8 gehalten. Der Abstandsbereich zwischen den hinteren Seitengeländern 59.1, 59.2 dient als zentrale Sammelzone 60.1 für die Flaschen 6 vom bestimmten Flaschentyp. Sie können aus der zentralen Sammelzone 60.1 händisch in Ladungsträger 45 eingesetzt werden. Auf den beiden Seiten des Sammelbereichs befinden sich seitliche Sammelzonen 60.2, 60.3, in denen sich die übrigen Flaschen 6 ansammeln, die ebenfalls händisch in Ladungsträger 45 eingesetzt werden können.

Die erfindungsgemäße Vorrichtung ermöglicht eine zumindest teilweise sortenreine Sortierung von Mehrwegflaschen bereits beim Handel, wodurch Transport- und Lageraufwand in nachfolgenden Stationen der Distributionskette vermindert wird.

### Bezugszeichenliste

- 1: Leergutautomat
- 2: Flascheneingabe
- 3: Flaschenausgabe
- 4: Flaschenerkennung
- 5: Transporteinrichtung
- 6: Flasche
- 7: Flaschenführung
- 8: Flaschentisch
- 9: Tischplatte
- 10: Förderband
- 10.1: Zentralbereich
- 10.2, 10.3: Seitenbereiche
- 11: Tischbein
- 12.1, 12.2: Seitengeländer
- 13: Flaschenweiche
- 13.1, 13.2: Weichenbauteil
- 14.1, 14.2: äußere Leitfläche
- 15.1, 15.2: innere Leitfläche
- 16: Führung
- 16.1: Traverse
- 17.1, 17.2, 17.3, 17.4: Pfosten
- 18.1, 18.2, 18.3, 18.4: Stangen
- 19: Lagerbauteil
- 20: Aktor
- 21.1, 21.2: vorderes Seitengeländer
- 22: Steuerungseinrichtung
- 23: Außengeländer
- 23.1: Austrittsöffnung im Außengeländer
- 24: Flaschenpacktisch
- 24.1: Standfuß
- 25: weiteres Förderband
- 26: Antrieb
- 27: Elektromotor
- 28: Getriebe
- 29: Flaschenbahn
- 30: weiteres Seitengeländer
- 31: weiteres Außengeländer
- 32: Verschlussklappe
- 33: Lagerwelle
- 34: Rahmen
- 35: Betätigungshebel
- 35.1: Hebelarm
- 35.2: Hebelarm
- 36: Kurbelstange
- 37: Schubstange
- 38: Handgriff
- 39: Rückhaltefinger
- 40: Fallschacht
- 41: Führungsblech
- 42: Zentrierfinger
- 43: Hubtisch
- 44: Lagerplatz
- 45: Ladungsträger
- 46: Lochplatte
- 47: Austrittsloch
- 48: Zentriereinheit
- 49: Zentriereinheit
- 50: Flaschenbahnsperre
- 51: Platte
- 52: Traverse
- 53: vertikales Loch
- 54: Steckzapfen
- 55: Formatteil
- 56: Anschlagplatte
- 57: Nut
- 58: weitere Nut
- 59.1, 59.2: hinteres Seitengeländer
- 60.1: zentrale Sammelzone
- 60.2, 60.3: seitliche Sammelzone

## Patentansprüche

1. Vorrichtung zum Sortieren von Leergut mit
• einem Leergutautomaten (1), der eine Flascheneingabe (2), eine Flaschenausgabe (3) und eine Flaschenerkennung (4) zwischen Flascheneingabe und Flaschenausgabe zum Erkennen des Flaschentyps einer von der Flascheneingabe zur Flaschenausgabe von der Flaschenerkennung vorbei verlagerten Flasche (6) aufweist,
• einem Flaschentisch (8) mit mindestens einem Förderband (10) zum Fördern von Flaschen (6) über den Flaschentisch und einem hochstehenden Außengeländer (24) zum Rückhalten von Flaschen (6) auf dem Flaschentisch (8),
• einer Flaschenweiche (13), die einen Einlass und einen Auslass aufweist, wobei der Einlass von der Flaschenausgabe (3) gespeist ist und die Flaschenweiche (13) mit Ihrem Auslass in verschiedene Weichenstellungen über dem Flaschentisch (8) einstellbar ist, die unterschiedliche Positionen senkrecht zur Förderrichtung des Förderbandes (10) aufweisen, wobei in mindestens einer Weichenstellung der Auslass über dem Förderband (10) angeordnet ist,
• einem mit der Flaschenweiche verbundenen Aktor (20), der ausgebildet ist, die Flaschenweiche (13) in die verschiedenen Weichenstellungen einzustellen, und
• einer Steuerungseinrichtung (22), die mit der Flaschenerkennung (4) des Leergutautomaten (1) und mit dem Aktor (20) verbunden ist und die ausgebildet ist, die Flaschenweiche (13) beim Erkennen einer Flasche (6) eines bestimmten Flaschentyps durch die Flaschenerkennung (4) in eine erste Weichenstellung einzustellen und beim Erkennen einer Flasche (6) eines anderen als des bestimmten Flaschentyps in eine von der ersten Weichenstellung verschiedene, zweite Weichenstellung einzustellen.

2. Vorrichtung nach Anspruch 1, bei der die Flaschenweiche (13) mindestens ein senkrecht zur Förderrichtung des Förderbandes verlagerbares Weichenbauteil (13.1, 13.2) mit mindestens einer Leitfläche (14.1, 14.2, 15.1, 15.2) aufweist, die in mindestens einer Weichenstellung eine auf dem Förderband (10) aufgesetzte Flasche (6) beim Transport auf dem Förderband (10) quer zur Förderrichtung des Förderbandes (10) ablenkt.

3. Vorrichtung nach Anspruch 2, bei der das Weichenbauteil (13.1,13.2) mindestens eine schräg zur Förderrichtung des Förderbandes (10) geneigte Leitfläche (14.1, 14.2, 15.1, 15.2) aufweist und entlang einer senkrecht zur Förderrichtung des Förderbandes (10) gerichteten Führung (16) in verschiedene Weichenstellungen einstellbar ist.

4. Vorrichtung nach Anspruch 3, bei der die Flaschenweiche (13) zwei Weichenbauteile (13.1, 13.2) aufweist, die äußere Leitflächen (14.1, 14.2) auf voneinander abgewandten Seiten haben und zwischen denen ein Abstandsbereich vorhanden ist, durch den in einer ersten Weichenstellung eine auf dem Förderband (10) angeordnete Flasche (6) in Förderrichtung des Förderbandes (10) hindurchtreten kann, wobei in einer zweiten Weichenstellung das eine Weichenbauteil (13.1, 13.2) mit seiner äußeren Seitenfläche (14.1, 14.2) eine auf dem Förderband (10) transportierte Flasche (6) zur einen Seite des Förderbandes (10) hin ablenkt und in einer von der ersten und zweiten Weichenstellung verschiedenen, dritten Weichenstellung das andere Weichenbauteil (13.1, 13.2) mit seiner äußeren Leitfläche (14.1, 14.2) eine auf dem Förderband (10) transportierte Flasche (6) zur anderen Seite des Förderbandes (10) hin seitlich ablenkt.

5. Vorrichtung nach einem der Ansprüche 1 bis 4, bei dem hinter der Flaschenweiche (13) oberhalb des mindestens einen Förderbandes (10) mindestens ein zum Förderband (10) paralleles Seitengeländer (12.1, 12.2) hochsteht und die Flaschenweiche (13) verschiedene Weichenstellungen mit dem Auslass auf verschiedenen Seiten des Seitengeländers (12.1, 12.2) hat.

6. Vorrichtung nach Anspruch 5, bei dem hinter der Flaschenweiche (13) zentral oberhalb des Förderbandes (10) zwei zum Förderband parallele Seitengeländer (12.1, 12.2) hochstehen, wobei zwischen den beiden Seitengeländern (12.1, 12.2) ein Zentralbereich (10.1) und auf den voneinander abgewandten Seiten der beiden Seitengeländer (12.1, 12.2) Seitenbereiche (10.2, 10.3) des Förderbandes (10) vorhanden sind, sodass eine aus der Flaschenweiche (13) in der ersten Weichenstellung austretende Flasche (6) auf dem Zentralbereich (10.1) des Förderbands (10) transportiert wird, eine aus der Flaschenweiche (13) in der zweiten Weichenstellung austretende Flasche (6) auf dem einen Seitenbereich (10.2) des Förderbandes (10) transportiert wird und eine aus der Flaschenweiche (13) in der dritten Weichenstellung austretende Flasche (6) auf dem anderen Seitenbereich (10.3) des Förderbandes (10) transportiert wird.

7. Vorrichtung nach Anspruch 6, bei der zwischen der Flaschenausgabe (3) und der Flaschenweiche (13) zentral über dem Förderband (10) zwei vordere Seitengeländer (21.1, 21.2) hochstehen, zwischen denen eine durch die Flaschenausgabe (3) auf das Förderband (10) aufgesetzte Flasche (6) auf dem Förderband (10) transportiert wird.

8. Vorrichtung nach Anspruch 6 oder 7, bei der sich in Förderrichtung des Förderbandes (10) hinten an jedes Seitengeländer (12.1, 12.2) ein hinteres Seitengeländer (59.1, 59.2) anschließt, wobei der Abstand der hinteren Seitengeländer (59.1, 59.2) voneinander in Förderrichtung des Förderbandes (10) zunimmt und die hinteren Seitengeländer (59.1, 59.2) eine nach hinten sich erweiternde zentrale Sammelzone (60.1) für Flaschen (6) seitlich begrenzen.

9. Vorrichtung nach einem der Ansprüche 1 bis 8, bei der sich in Förderrichtung des Förderbandes (10) hinten an den Flaschentisch (8) ein Flaschenpacktisch (24) anschließt, der parallele Flaschenbahnen (29) aufweist, die mit vom Förderband (10) zum Flaschenpacktisch (23) transportierten Flaschen (6) befüllbar sind, wobei benachbarte Flaschenbahnen (29) in einem Abstand vom Flaschentisch (8) durch vom Flaschenpacktisch (24) hochstehende weitere Seitengeländer (30) voneinander getrennt sind.

10. Vorrichtung nach Anspruch 9, bei der der Flaschenpacktisch (23) Fallschächte (40) unterhalb der Flaschenbahnen (29) aufweist, sowie Verschlusseinrichtungen (32), die in einer Schließstellung die Flaschenbahnen (29) unten begrenzen, sodass Flaschen (6) auf den Verschlusseinrichtungen (32) entlang der Flaschenbahnen (29) verlagerbar sind, und die in eine Öffnungsstellung verlagerbar sind, in der sie die Fallschächte (40) freigeben, sodass in den Flaschenbahnen (29) angeordnete Flaschen (6) in die Fallschächte (40) hineinfallen, mindestens eine mit den Verschlusseinrichtungen (32) verbundene Antriebseinrichtung (35) vorhanden ist, mittels der die Verschlusseinrichtungen (32) in die Schließstellung und in die Öffnungsstellung verlagerbar sind und ein Lagerplatz (44) für mindestens einen Ladungsträger (45) für Flaschen (6) unter den Fallschächten (40) vorhanden ist, auf dem mindestens ein Ladungsträger (45) positionierbar ist, um Flaschen (6) durch die Fallschächte (40) in die Ladungsträger (45) einzusetzen.

11. Vorrichtung nach Anspruch 10, bei der die Verschlusseinrichtungen Verschlussklappen (32) sind, die um eine horizontale Achse klappbar sind, in Schließstellung horizontal angeordnet und in Öffnungsstellung nach unten geklappt sind.

12. Vorrichtung nach Anspruch 11, bei der jede Flaschenbahn (29) nur eine einzige Verschlussklappe (32) aufweist.

13. Vorrichtung nach einem der Ansprüche 10 bis 12, bei der der Flaschenpacktisch (24) mindestens ein weiteres Förderband (25) aufweist, dessen Förderrichtung parallel zu den Flaschenbahnen (29) erstreckt ist und das am vorderen Rand auf den Flaschenpacktisch (24) aufgesetzte Flaschen (6) zu den Flaschenbahnen (29) hin transportiert.

14. Vorrichtung nach Anspruch 13, die Rückhalteeinrichtungen (39) aufweist, die aus einer Rückhaltestellung, in der sie in die Flaschenbahnen (29) eingreifen, um den weiteren Transport von Flaschen (6) in die Flaschenbahnen (29) zu blockieren, in eine Freigabestellung verlagerbar sind, in der sie nicht zwischen die Flaschenbahnen (29) eingreifen und die eine weitere Antriebseinrichtung (35, 36, 37) aufweist, mit der die Rückhalteeinrichtungen (39) in die Rückhaltestellung und in die Freigabestellung verlagerbar sind.

15. Vorrichtung nach Anspruch 14, bei der die Verschlusseinrichtungen (32) und die Rückhalteeinrichtungen (36) mit einer gemeinsamen Antriebseinrichtung (35, 36, 37) verbunden sind.

16. Vorrichtung nach Anspruch 14 oder 15, bei der die Rückhalteeinrichtungen Rückhaltefinger (39) sind, die um eine horizontale Achse in die Rückhaltestellung und in die Freigabestellung schwenkbar sind.

17. Vorrichtung nach einem der Ansprüche 14 bis 16, bei der zumindest ein Teil der Rückhaltefinger (39) und der Verschlussklappen (32) auf gemeinsamen horizontalen Lagerwellen (33) fixiert sind.

18. Vorrichtung nach einem der Ansprüche 10 bis 17, bei der die Antriebseinrichtung (35, 36, 37) ein mechanisches Getriebe (36, 37) umfassen, das eingangsseitig mit einem Antrieb (35) und ausgangsseitig mit den Verschlusseinrichtungen (32) und/oder den Rückhalteeinrichtungen (39) verbunden ist.

19. Vorrichtung nach Anspruch 18, bei der der Antrieb des Getriebes (36, 37) ein Bedienhebel (35) ist.

20. Vorrichtung nach einem der Ansprüche 10 bis 19, bei der die Fallschächte (40) Führungsbleche (41) aufweisen, um die aus den Flaschenbahnen (29) herunterfallenden Flaschen (6) auf die Stellplätze eines Ladungsträgers (45) auf einem Lagerplatz (44) auszurichten.

21. Vorrichtung nach einem der Ansprüche 10 bis 20, bei der unterhalb der Fallschächte (40) weitere Führungseinrichtungen (48) vorhanden sind, um die Flaschen den Flaschenstellplätzen eines Ladungsträgers (45) auf einem Lagerplatz (44) zuzuführen.

22. Vorrichtung nach Anspruch 21, bei der die weiteren Führungseinrichtungen jeweils mehrere um eine Austrittsöffnung eines Fallschachtes (40) herum angeordnete, flexible Zentrierfinger (42) aufweisen, die nach unten auf eine vertikale Mittelachse durch die Austrittsöffnung zugeneigt sind.

23. Vorrichtung nach einem der Ansprüche 10 bis 22, bei der der Lagerplatz (44) eine Arbeitsfläche eines Hubtisches (43) ist, der unterhalb der Flaschenbahnen (29) angeordnet ist.
